(19) Europäisches Patentamt
European Patent Office
Office européen des brevets

(11) **EP 4 707 776 A1**

(12) **EUROPEAN PATENT APPLICATION**
published in accordance with Art. 153(4) EPC

(43) Date of publication:
**11.03.2026 Bulletin 2026/11**

(21) Application number: **24800125.7**

(22) Date of filing: **01.05.2024**

(51) International Patent Classification (IPC):
***G01N 15/1429*** *(2024.01)*

(52) Cooperative Patent Classification (CPC):
**G01N 15/1429**

(86) International application number:
**PCT/JP2024/016828**

(87) International publication number:
**WO 2024/228394 (07.11.2024 Gazette 2024/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.05.2023 US 202363499732 P**
**01.12.2023 US 202363605033 P**

(71) Applicants:
• **The University of Tokyo**
**Bunkyo-ku, Tokyo 113-8654 (JP)**
• **The University of Birmingham**
**Birmingham, West Midlands B15 2TT (GB)**

(72) Inventors:
• **OTA, Sadao**
**Tokyo 113-8654 (JP)**
• **IWAMOTO, Yuichiro**
**Tokyo 113-8654 (JP)**
• **SALMON, Benjamin**
**Birmingham, Edgbaston, Birmingham, West Midlands**
**B15 2TT (GB)**
• **KRULL, Alexander**
**Birmingham, Edgbaston, Birmingham, West Midlands**
**B15 2TT (GB)**

(74) Representative: **De Clercq & Partners**
**Edgard Gevaertdreef 10a**
**9830 Sint-Martens-Latem (BE)**

(54) **DETECTION METHOD, DETECTION SYSTEM, NOISE REMOVAL MODEL TRAINING METHOD, AND NOISE REMOVAL MODEL TRAINING SYSTEM**

(57) A detection system includes: a detection signal obtainer 306 configured to obtain a signal from a detection target as a detection signal; and a denoised signal obtainer 307 configured to input the detection signal into a denoising model 304 trained using a noise signal in the absence of the detection target to obtain at least one denoised signal that has undergone denoising.

FIG.1

EP 4 707 776 A1

## Description

### Technical Field

The present invention relates to a detection method, a detection system, a denoising model training method, and a denoising model training system.

### Background Art

Flow cytometers are widely used to analyze biological samples such as cells and microorganisms. In a flow cytometer, a biological sample flowing inside a transparent flow cell is optically analyzed. Inside the flow cell, the flow of sample fluid containing the biological sample and the flow of sheath fluid form a laminar flow, and the flow of sample fluid is located within the flow of sheath fluid, which is in contact with the inner wall of the flow cell. Adjusting the aperture size of the flow cell and the supply amounts of the sample fluid and sheath fluid allows each biological sample to flow into the flow cell. Thus, with the flow cytometer, it is possible to optically analyze each of the biological samples constituting a biological sample population.

### Citation List

### Patent Literature

Patent Literature 1: Japanese Patent No. 5230648

Patent Literature 2: Japanese Patent No. 7134184

Patent Literature 3: Japanese Patent No. 7329165

Patent Literature 4: Japanese Patent No. 7369385

### Summary of Invention

### Technical Problem

Not only in the flow cytometer but also in an apparatus for detecting a detection target, it is necessary to cancel noise so as to accurately detect the detection target. To this end, one of objects of the present invention is to provide a detection method, a detection system, a denoising model training method, and a denoising model training system that are capable of accurately detecting a detection target.

### Solution to Problem

A detection method according to an embodiment includes: obtaining a detection signal; and inputting the detection signal into a denoising model trained using a noise signal to obtain at least one denoised signal that has undergone denoising. The detection signal may be a one-dimensional time-series signal. The detection signal may also be a higher-dimensional signal such as a two-dimensional signal, a three-dimensional signal, or a four-dimensional signal. Alternatively, the detection signal does not have to be a two-dimensional signal. The detection signal may be a signal from a detection target. The detection signal may be a signal from a detection target illuminated with light. The detection signal may be a signal from a detection target illuminated with structured illumination. The detection signal may be a signal from a detection target detected by a detector. The noise signal may be white noise. The noise signal may be a one-dimensional time-series signal. The noise signal may also be a higher-dimensional signal such as a two-dimensional signal, a three-dimensional signal, or a four-dimensional signal. Alternatively, the noise signal does not have to be a two-dimensional signal. The noise signal may be a signal in the absence of the detection target. The noise signal may be a signal detected by the detector in the absence of the detection target in the detection region of the detector.

A detection method according to an embodiment includes: obtaining a noise signal; training a denoising model using the noise signal; obtaining a detection signal; and inputting the detection signal into the trained denoising model to obtain at least one denoised signal that has undergone denoising. The detection signal may be a one-dimensional time-series signal. The detection signal may also be a higher-dimensional signal such as a two-dimensional signal, a three-dimensional signal, or a four-dimensional signal. Alternatively, the detection signal does not have to be a two-dimensional signal. The detection signal may be a signal from a detection target. The detection signal may be a signal from a detection target illuminated with light. The detection signal may be a signal from a detection target illuminated with structured illumination. The detection signal may be a signal from a detection target detected by a detector. The noise signal may be white noise. The noise signal may be a one-dimensional time-series signal. The noise signal may also be a higher-dimensional signal such as a two-dimensional signal, a three-dimensional signal, or a four-dimensional signal. Alternatively, the noise signal does not have to be a two-dimensional signal. The noise signal may be a signal in the absence of the detection target. The noise signal may be a signal detected by the detector in the absence of the detection target in the detection region of the detector.

In the above detection method, the at least one denoised signal may be a plurality of denoised signals, and the method may further include obtaining a median value of the plurality of denoised signals as the denoised signal.

In the above detection method, the denoising model may be trained using the noise signal and a signal for learning. The signal for learning may be a one-dimensional time-series signal. The signal for learning may also be a higher-dimensional signal such as a two-dimensional signal, a three-dimensional signal, or a four-dimensional signal. Alternatively, the signal for learning does not have to be a two-dimensional signal. The signal for learning may be a signal from a learning target. The signal for learning may be a signal from a learning target illuminated with light. The signal for learning may be a signal from a learning target illuminated with structured illumination. The signal for learning may be a signal from a learning target detected by a detector.

The above detection method may further include obtaining a signal for learning.

In the above detection method, the denoising model may be trained using the noise signal and then trained using the signal for learning.

In the above detection method, after the denoising model is trained using the noise signal, the denoising model may be trained using the signal for learning.

In the above detection method, training a denoising model using the noise signal and a signal for learning may include: inputting the signal for learning into the denoising model to obtain a denoised signal for learning; obtaining a differential signal that is a difference between the signal for learning and the denoised signal for learning; and evaluating the differential signal using the noise signal and feeding back the result of the evaluation to the denoising model.

In the above detection method, the denoising model may be an unsupervised machine learning model.

In the above detection method, the denoising model may include a neural network.

In the above detection method, the denoising model may include an autoencoder.

In the above detection method, the autoencoder may be a variational autoencoder.

In the above detection method, a noise generation model may be trained using the noise signal, and a noise estimation signal estimated by the noise generation model may be used as the noise signal for training the denoising model.

The above detection method may further include training a noise generation model using the noise signal, and using a noise estimation signal estimated by the noise generation model as the noise signal for training the denoising model.

In the above detection method, the noise generation model may be an unsupervised machine learning model.

In the above detection method, the noise generation model may include a neural network.

In the above detection method, the neural network may be a convolutional neural network.

In the above detection method, the detection target and/or the learning target may be a particle.

In the above detection method, the detection target and/or learning target may be a biomolecule.

In the above detection method, the detection target and/or learning target may be an extracellular vesicle.

In the above particle detection method, the solution containing a detection target particle may be serum, plasma, or interstitial fluid.

In the above particle detection method, the serum, plasma, or interstitial fluid may be unpurified.

A detection system according to an embodiment includes: a detection signal obtainer configured to obtain a detection signal; and a denoised signal obtainer configured to input the detection signal into a denoising model trained using a noise signal to obtain at least one denoised signal that has undergone denoising. The detection signal may be a one-dimensional time-series signal. The detection signal may be a higher-dimensional signal such as a two-dimensional signal, a three-dimensional signal, or a four-dimensional signal. Alternatively, the detection signal does not have to be a two-dimensional signal. The detection signal may be a signal from a detection target. The detection signal may be a signal from a detection target illuminated with light. The detection signal may be a signal from a detection target illuminated with structured illumination. The detection signal may be a signal from a detection target detected by a detector. The noise signal may be white noise. The noise signal may be a one-dimensional time-series signal. The noise signal may also be a higher-dimensional signal such as a two-dimensional signal, a three-dimensional signal, or a four-dimensional signal. Alternatively, the noise signal does not have to be a two-dimensional signal. The noise signal may be a signal in the absence of the detection target. The noise signal may be a signal detected by the detector in the absence of the detection target in the detection region of the detector.

A detection system according to an embodiment includes: a noise signal obtainer configured to obtain a noise signal; a trainer configured to train a denoising model using the noise signal; a detection signal obtainer configured to obtain a detection signal; and a denoised signal obtainer configured to input the detection signal into the trained denoising model to obtain at least one denoised signal that has undergone denoising. The detection signal may be a one-dimensional time-series signal. The detection signal may also be a higher-dimensional signal such as a two-dimensional signal, a three-dimensional signal, or a four-dimensional signal. Alternatively, the detection signal does not have to be a two-dimensional signal. The detection signal may be a signal from a detection target. The detection signal may be a signal from a detection target illuminated with light. The detection signal may be a signal from a detection target illuminated with structured illumination. The detection signal may be a signal from a detection target detected by a detector. The noise signal may be white noise. The noise signal may be a one-dimensional time-series signal. The noise signal may also be a higher-dimensional signal such as a two-dimensional signal, a three-dimensional signal, or a four-dimensional signal. Alternatively, the noise signal does not have to be a two-dimensional signal. The noise signal may be a signal in the absence of the detection target. The noise signal may be a signal detected by the detector in the absence of the detection target in the detection region of the detector.

In the above detection system, at least one denoised signal may be a plurality of denoised signals, and the denoised signal obtainer may be configured to obtain a median value of the plurality of denoised signals as the denoised signal.

In the above detection system, the denoising model may be trained using the noise signal and then trained using the signal for learning.

In the above detection system, the denoising model may be trained using the noise signal and a signal for learning. The signal for learning may be a one-dimensional time-series signal. The signal for learning may also be a higher-dimensional signal such as a two-dimensional signal, a three-dimensional signal, or a four-dimensional signal. Alternatively, the signal for learning does not have to be a two-dimensional signal. The signal for learning may be a signal from a learning target. The signal for learning may be a signal from a learning target illuminated with light. The signal for learning may be a signal from a learning target illuminated with structured illumination. The signal for learning may be a signal from a learning target detected by a detector.

The above detection system may further include a learning signal obtainer configured to obtain a signal for learning.

In the above detection system, the trainer may train the denoising model using a noise signal, and then train the denoising model using a signal for learning.

In the above detection system, a noise generation model may be trained using a noise signal, and a noise estimation signal estimated by the noise generation model may be used as the noise signal for training the denoising model.

In the above detection system, the trainer may input the signal for learning into the denoising model, obtain a denoised signal for learning, obtain a differential signal that is the difference between the signal for learning and the denoised signal for learning, evaluate the differential signal using the noise signal, and feed back the result of the evaluation to the denoising model.

In the above detection system, the denoising model may be an unsupervised machine learning model.

In the above detection system, the denoising model may include a neural network.

In the above detection system, the denoising model may include an autoencoder.

In the above detection system, the autoencoder may be a variational autoencoder.

In the above detection system, the trainer may train the noise generation model using the noise signal, and use a noise estimation signal estimated by the noise generation model as the noise signal for training the denoising model.

In the above detection system, the noise generation model may be an unsupervised machine learning model.

In the above detection system, the noise generation model may include a neural network.

In the above detection system, the neural network may be a convolutional neural network.

In the above detection system, the detection target and/or the learning target may be a particle.

In the above detection system, the detection target and/or learning target may be a biomolecule.

In the above detection system, the detection target and/or learning target may be an extracellular vesicle.

In the above detection system, the solution containing the detection target may be serum, plasma, or interstitial fluid.

In the above detection system, the serum, plasma, or interstitial fluid may be unpurified.

A denoising model training method according to an embodiment includes: obtaining a noise signal; and training a denoising model using the noise signal. The noise signal may be white noise. The noise signal may be a one-dimensional time-series signal. The noise signal may also be a higher-dimensional signal such as a two-dimensional signal, a three-dimensional signal, or a four-dimensional signal. Alternatively, the noise signal does not have to be a two-dimensional signal. The noise signal may be a signal in the absence of the detection target. The noise signal may be a signal detected by the detector in the absence of the detection target in the detection region of the detector.

In the above denoising model training method, the denoising model may be trained using the noise signal and a signal for learning. The signal for learning may be a one-dimensional time-series signal. The signal for learning may also be a higher-dimensional signal such as a two-dimensional signal, a three-dimensional signal, or a four-dimensional signal. Alternatively, the signal for learning does not have to be a two-dimensional signal. The signal for learning may be a signal from a learning target. The signal for learning may be a signal from a learning target detected by a detector.

The above denoising model training method may further include obtaining a signal for learning.

In the above denoising model training method, the denoising model may be trained using the noise signal, and then the denoising model may be trained using the signal for learning.

In the above denoising model training method, training the denoising model using the noise signal and the signal for learning may include: inputting the signal for learning into the denoising model to obtain a denoised signal for learning; obtaining a differential signal that is the difference between the signal for learning and the denoised signal for learning; and evaluating the differential signal using the noise signal and feeding back the result of the evaluation to the denoising model.

In the above denoising model training method, the denoising model may be an unsupervised machine learning model.

In the above denoising model training method, the denoising model may include a neural network.

In the above denoising model training method, the denoising model may include an autoencoder.

In the above denoising model training method, the autoencoder may be a variational autoencoder.

The above denoising model training method may further include: training a noise generation model using the noise signal; and using a noise estimation signal estimated by the noise generation model as the noise signal for training the denoising model.

In the above denoising model training method, the noise generation model may be an unsupervised machine learning model.

In the above denoising model training method, the noise generation model may include a neural network.

In the above denoising model training method, the neural network may be a convolutional neural network.

A denoising model training system according to an embodiment includes: a noise signal obtainer configured to obtain a noise signal; and a trainer configured to train a denoising model using the noise signal. The noise signal may be white noise. The noise signal may be a one-dimensional time-series signal. The noise signal may also be a higher-dimensional signal such as a two-dimensional signal, a three-dimensional signal, or a four-dimensional signal. Alternatively, the noise signal does not have to be a two-dimensional signal. The noise signal may be a signal in the absence of the detection target. The noise signal may be a signal detected by the detector in the absence of the detection target in the detection region of the detector.

In the above denoising model training system, the trainer may train the denoising model using the noise signal and a signal for learning. The signal for learning may be a one-dimensional time-series signal. The signal for learning may also be a higher-dimensional signal such as a two-dimensional signal, a three-dimensional signal, or a four-dimensional signal. Alternatively, the signal for learning does not have to be a two-dimensional signal. The signal for learning may be a signal from a learning target. The signal for learning may be a signal from a learning target detected by a detector.

The above denoising model training system may further include a learning signal obtainer configured to obtain a signal for learning.

In the above denoising model training system, the trainer may train the denoising model using the noise signal, and then train the denoising model using a signal for learning.

In the above denoising model training system, the trainer may input a signal for learning into a denoising model to obtain a denoised signal for learning, obtain a differential signal that is the difference between the signal for learning and the denoised signal for learning, evaluate the differential signal using the noise signal, and feed back the result of the evaluation to the denoising model.

In the above denoising model training system, the denoising model may be an unsupervised machine learning model.

In the above denoising model training system, the denoising model may include a neural network.

In the above denoising model training system, the denoising model may include an autoencoder.

In the above denoising model training system, the autoencoder may be a variational autoencoder.

In the above denoising model training system, the trainer may train the noise generation model using the noise signal, and use a noise estimation signal estimated by the noise generation model as the noise signal for training the denoising model.

In the above denoising model training system, the noise generation model may be an unsupervised machine learning model.

In the above denoising model training system, the noise generation model may include a neural network.

In the above denoising model training system, the neural network may be a convolutional neural network.

A detection method according to an embodiment includes: obtaining a signal from a detection target as a detection signal; and canceling noise from the detection signal using a computer filter, and the filter is designed based on a signal for designing and a denoised signal for designing that is obtained by inputting the signal for designing into a denoising model.

In the above detection method, a parameter of the filter is set such that a signal output by processing the signal for designing with the filter approximates the denoised signal for designing.

In the above detection method, a parameter of the filter is set such that the difference between a signal output by processing the signal for designing with the filter and the denoised signal for designing is small.

In the above detection method, the filter may be a convolution filter.

In the above detection method, the filter may be a one-dimensional convolution filter.

In the above detection method, the filter may be a kernel, and the weight of the kernel may be set such that a signal output by processing the signal for designing with the kernel approximates the denoised signal for designing.

In the above detection method, the weight of the kernel may be set such that the difference between a signal output by processing the signal for designing with the kernel and the denoised signal for designing is small.

In the above detection method, the denoising model may be trained by the above denoising model training method.

In the above detection method, the denoising model may be trained using the above denoising model training system.

In the above detection method, the signal for designing may be a one-dimensional time-series signal. The signal for designing may also be a higher-dimensional signal such as a two-dimensional signal, a three-dimensional signal, or a four-dimensional signal. Alternatively, the signal for designing does not have to be a two-dimensional signal. The signal for designing may be a signal from a detection target for designing. The signal for designing may be a signal from a detection target for designing illuminated with light. The signal for designing may be a signal from a detection target for designing illuminated with structured illumination. The signal for designing may be a signal from a detection target for designing detected by a detector.

In the above detection method, the detection target for designing may be a particle.

In the above detection method, the detection target for designing may be a biomolecule.

In the above detection method, the detection target for designing may be an extracellular vesicle.

In the above detection method, the solution containing the detection target for designing may be serum, plasma, or interstitial fluid.

In the above detection method, the serum, plasma, or interstitial fluid may be unpurified.

A detection system according to an embodiment includes: a detection signal obtainer configured to obtain a signal from a detection target as a detection signal; and a computer filter configured to cancel noise from the detection signal, and the filter is designed based on a signal for designing and a denoised signal for designing obtained by inputting the signal for designing into a denoising model.

In the above detection system, a parameter of the filter is set such that a signal output by processing the signal for designing with the filter approximates the denoised signal for designing.

In the above detection system, a parameter of the filter is set such that the difference between a signal output by processing the signal for designing with the filter and the denoised signal for designing is small.

In the above detection system, the filter may be a convolution filter.

In the above detection system, the filter may be a one-dimensional convolution filter.

In the above detection system, the filter may be a kernel, and the weight of the kernel may be set such that a signal output by processing the signal for designing with the kernel approximates the denoised signal for designing.

In the above detection system, the weight of the kernel may be set such that the difference between a signal output by processing the signal for designing with the kernel and the denoised signal for designing is small.

In the above detection system, the denoising model may be trained by the above denoising model training method.

In the above detection system, the denoising model may be trained using the above denoising model training system.

In the above detection system, the signal for designing may be a one-dimensional time-series signal. The signal for designing may also be a higher-dimensional signal such as a two-dimensional signal, a three-dimensional signal, or a four-dimensional signal. Alternatively, the signal for designing does not have to be a two-dimensional signal. The signal for designing may be a signal from a detection target for designing. The signal for designing may be a signal from a detection target for designing detected by a detector.

In the above detection system, the detection target for designing may be a particle.

In the above detection system, the detection target for designing may be a biomolecule.

In the above detection system, the detection target for designing may be an extracellular vesicle.

In the above detection system, the solution containing the detection target for designing may be serum, plasma, or interstitial fluid.

In the above detection system, the serum, plasma, or interstitial fluid may be unpurified.

A computer filter design method according to an embodiment includes: obtaining a signal for designing and a denoised signal for designing obtained by inputting the signal for designing into a denoising model; and setting a parameter of a filter such that a signal output by processing the signal for designing with the filter approximates the denoised signal for designing.

In the above computer filter design method, the parameter of the filter may be set such that the difference between a signal output by processing the signal for designing with the filter and the denoised signal for designing is small.

In the above computer filter design method, the filter may be a convolution filter.

In the above computer filter design method, the filter may be a one-dimensional convolution filter.

In the above computer filter design method, the filter may be a kernel, and the weight of the kernel may be set such that a signal output by processing the signal for designing with the kernel approximates the denoised signal for designing.

In the above computer filter design method, the weight of the kernel may be set such that the difference between a signal output by processing the signal for designing with the kernel and the denoised signal for designing is small.

In the above computer filter design method, the denoising model may be trained by the above denoising model training method.

In the above computer filter design method, the denoising model may be trained using the above denoising model training system.

In the above computer filter design method, the signal for designing may be a one-dimensional time-series signal. The signal for designing may also be a higher-dimensional signal such as a two-dimensional signal, a three-dimensional signal, or a four-dimensional signal. Alternatively, the signal for designing does not have to be a two-dimensional signal. The signal for designing may be a signal from a detection target for designing. The signal for designing may be a signal from a detection target for designing detected by a detector.

In the above computer filter design method, the detection target for designing may be a particle.

In the above computer filter design method, the detection target for designing may be a biomolecule.

In the above computer filter design method, the detection target for designing may be an extracellular vesicle.

In the above computer filter design method, the solution containing the detection target for designing may be serum, plasma, or interstitial fluid.

In the above computer filter design method, the serum, plasma, or interstitial fluid may be unpurified.

A computer filter design system according to an embodiment includes: a designing signal obtainer configured to obtain a signal for designing and a denoised signal for designing obtained by inputting the signal for designing into a denoising model; a filter; and a parameter setter configured to set a parameter of the filter such that a signal output by processing the signal for designing with the filter approximates the denoised signal for designing.

In the above computer filter design system, the parameter setter may set a parameter of the filter such that the difference between a signal output by processing the signal for designing with the filter and the denoised signal for designing is small.

In the above computer filter design system, the filter may be a convolution filter.

In the above computer filter design system, the filter may be a one-dimensional convolution filter.

In the above computer filter design system, the filter may be a kernel, and the parameter setter may set the weight of the kernel such that a signal output by processing the signal for designing with the kernel approximates the denoised signal for designing.

In the above computer filter design system, the parameter setter may set the weight of the kernel such that the difference between a signal output by processing the signal for designing with the kernel and the denoised signal for designing is small.

In the above computer filter design system, the denoising model may be trained by the above denoising model training method.

In the above computer filter design system, the denoising model may be trained using the above denoising model training system.

In the above computer filter design system, the signal for designing may be a one-dimensional time-series signal. The signal for designing may also be a higher-dimensional signal such as a two-dimensional signal, a three-dimensional signal, or a four-dimensional signal. Alternatively, the signal for designing does not have to be a two-dimensional signal. The signal for designing may be a signal from a detection target for designing. The signal for designing may be a signal from a detection target for designing detected by a detector.

In the above computer filter design system, the detection target for designing may be a particle.

In the above computer filter design system, the detection target for designing may be a biomolecule.

In the above computer filter design system, the detection target for designing may be an extracellular vesicle.

In the above computer filter design system, the solution containing the detection target for designing may be serum, plasma, or interstitial fluid.

In the above computer filter design system, the serum, plasma, or interstitial fluid may be unpurified.

A detection method according to an embodiment includes: obtaining a signal from a detection target as a detection signal; and inputting the detection signal into a filter that is designed in advance to obtain at least one denoised signal that has undergone denoising.

In the above detection method, a parameter of the filter may be designed such that a signal output by processing a signal for designing with the filter approximates a denoised signal for designing obtained by inputting the signal for designing into a denoising model.

In the above detection method, a parameter of the filter may be set such that the difference between a signal output by processing the signal for designing with the filter and the denoised signal for designing is small.

In the above detection method, the filter may be a one-dimensional convolution time filter.

In the above detection method, the filter may be a kernel, and the weight of the kernel may be set such that a signal output by processing the signal for designing with the kernel approximates the denoised signal for designing.

In the above detection method, the weight of the kernel may be set such that the difference between a signal output by processing the signal for designing with the kernel and the denoised signal for designing is small.

In the above detection method, the denoising model may be trained using the noise signal.

The above detection method may further include sorting the detection target with a sorter on the basis of the denoised signal.

A detection system according to an embodiment includes: a detection signal obtainer configured to obtain a signal from a detection target as a detection signal; and a denoised signal obtainer configured to input the detection signal into a filter that is designed in advance to obtain at least one denoised signal that has undergone denoising.

In the above detection system, a parameter of the filter may be designed such that a signal output by processing a signal for designing with the filter approximates a denoised signal for designing obtained by inputting the signal for designing into a denoising model.

In the above detection system, a parameter of the filter may be set such that the difference between a signal output by processing the signal for designing with the filter and the denoised signal for designing is small.

In the above detection system, the filter may be a one-dimensional convolution time filter.

In the above detection system, the filter may be a kernel, and the weight of the kernel may be set such that a signal output by processing the signal for designing with the kernel approximates the denoised signal for designing.

In the above detection system, the weight of the kernel may be set such that the difference between a signal output by processing the signal for designing with the kernel and the denoised signal for designing is small.

In the above detection system, the denoising model may be trained using the noise signal.

The above detection system may further include a sorter configured to sort the detection target based on the denoised signal.

**Advantageous Effect of Invention**

According to the present invention, it is possible to provide a detection method, a detection system, a denoising model training method, and a denoising model training system that are capable of accurately detecting a detection target.

**Brief Description of Drawings**

[Figure 1] Figure 1 is a schematic view illustrating a detection system according to an embodiment.

[Figure 2] Figure 2 is a schematic view illustrating a computer according to an embodiment.

[Figure 3] Figure 3 is a schematic view illustrating an example of an optical system of a detection system according to an embodiment.

[Figure 4] Figure 4 is a schematic view illustrating a denoising method according to an embodiment.

[Figure 5] Figure 5 is a schematic view illustrating a denoising method according to an embodiment.

[Figure 6] Figure 6 is a schematic view illustrating a denoising method according to an embodiment.

[Figure 7] Figure 7 is a schematic view illustrating a convolution of a kernel and a detection signal according to an embodiment.

[Figure 8] Figure 8 is a schematic view illustrating a detection system according to an embodiment.

[Figure 9] Figure 9 is a schematic view illustrating a sorter according to an embodiment.

[Figure 10] Figure 10 is a schematic view illustrating detection of light intensity using an optical structure according to an embodiment.

[Figure 11] Figure 11 is a schematic view illustrating an optical particle detection apparatus according to Example 2.

[Figure 12] Figure 12 includes graphs illustrating a ground truth time-series signal, an attenuated time-series signal, and a denoised detection time-series signal according to Example 2.

[Figure 13] Figure 13 includes graphs illustrating the relationship between the height of normalized scattered light peaks in each of the ground truth signal, the attenuated signal, and the denoised signal according to Example 2 and the number thereof.

[Figure 14] Figure 14 is a graph illustrating a correlation between the peak signal-to-noise ratio (PSNR) of an attenuated signal and the PSNR of a denoised signal according to Example 2.

[Figure 15] Figure 15 is a graph illustrating PR curves of an attenuated signal before denoising, an attenuated signal after denoising using a denoising model, and an attenuated signal after denoising using a Gaussian filter according to Example 2.

[Figure 16] Figure 16 is a graph illustrating a detection signal before denoising and a detection signal after denoising using a denoising model according to Example 3.

[Figure 17] The left side of Figure 17 is a graph illustrating the relationship between the height of peaks of scattered light before denoising according to Example 3 and the number thereof. The right side of Figure 17 is a graph illustrating the relationship between the height of peaks of scattered light after denoising according to Example 3 and the number thereof.

[Figure 18] Figure 18 is a graph illustrating the increase and decrease in the number of peaks of scattered light caused by denoising according to Example 3.

[Figure 19] Figure 19 is a graph illustrating the relationship between the particle size of particles and peak height of scattered light after denoising according to Example 3.

[Figure 20] The left side of Figure 20 is a scatter plot illustrating the relationship between the peak area of scattered light before denoising and the peak area of fluorescence according to Example 4. The right side of Figure 20 is a scatter plot illustrating the relationship between the peak area of scattered light after denoising and the peak area of fluorescence according to Example 4.

[Figure 21] Figure 21 is a graph illustrating the relationship between the dilution rate and the particle concentration obtained by detection according to Example 5.

[Figure 22] Figure 22 is a graph illustrating the relationship between the dilution rate and the average number of CD9-positive extracellular vesicles detected in one minute according to Example 6.

[Figure 23] Figure 23 is a graph illustrating the relationship between the dilution rate and the proportion of CD9-positive extracellular vesicles to the total number of detected particles according to Example 6.

[Figure 24] Figure 24 is a scatter plot illustrating the relationship between the fluorescence peak area indicating CD9 positivity and the fluorescence peak area indicating CD147 positivity according to Example 7.

[Figure 25] Figure 25 is a graph illustrating the number of particles positive for both CD9 and CD147 detected per mL for each sample according to Example 7.

[Figure 26] Figure 26 is a graph illustrating the proportion of particles positive for both CD9 and CD147 to the total number of detected particles for each sample according to Example 7.

[Figure 27A] Figure 27A is a scatter plot illustrating the relationship between the fluorescence peak area indicating CD9 positivity and the fluorescence peak area indicating CD147 positivity in serum samples derived from colon cancer patients according to Example 8.

[Figure 27B] Figure 27B is a scatter plot illustrating the relationship between the fluorescence peak area indicating CD9 positivity and the fluorescence peak area indicating CD147 positivity in serum samples derived from healthy individuals according to Example 8.

[Figure 28] Figure 28 is a graph illustrating the total number of detected particles for each sample according to Example 8.

[Figure 29] Figure 29 is a graph illustrating the number of particles positive for both CD9 and CD147 detected for each sample according to Example 8.

[Figure 30] Figure 30 includes graphs illustrating the proportion of the number of particles positive for both CD9 and CD147 to the number of CD9-positive particles for each sample according to Example 8.

[Figure 31] Figure 31 is a schematic view of an optical particle detection apparatus according to Example 10.

[Figure 32] Figure 32 is a graph illustrating a ground truth time-series signal, an attenuated time-series signal, and a denoised detection time-series signal according to Example 10.

[Figure 33] Figure 33 is a graph illustrating the relationship between the height of a signal peak and the number of peaks according to Example 10.

[Figure 34] Figure 34 is a graph illustrating a correlation between the peak signal-to-noise ratio (PSNR) of an attenuated signal and the PSNR of a denoised signal according to Example 10.

[Figure 35] Figure 35 is a graph illustrating PR curves of an attenuated signal before denoising and an attenuated signal after denoising using a denoising model according to Example 10.

[Figure 36] Figure 36 is a graph illustrating a detection signal before denoising and a detection signal after denoising with a denoising model according to Example 11.

[Figure 37] Figure 37 includes graphs illustrating a detection signal before denoising and a detection signal after denoising with a denoising model according to Example 11.

[Figure 38] Figure 38 includes graphs illustrating the relationship between the peak area of scattered light and the peak area of fluorescence according to Example 11.

[Figure 39] Figure 39 includes histograms of peak heights of scattered light according to Example 11.

[Figure 40] Figure 40 is a graph illustrating the result of approximating the relationship between the particle size of particles and the peak height of scattered light after denoising using a sextic function according to Example 11.

[Figure 41] Figure 41 is a graph illustrating the relationship between particle size and recovery rate, which indicates the number of particles detected relative to the number of particles passed through a flow cell, according to Example 11.

[Figure 42] Figure 42 is a scatter plot illustrating the relationship between the peak area of scattered light after denoising using a denoising model and the peak area of CD9-derived fluorescence according to Example 12.

[Figure 43] Figure 43 is a scatter plot illustrating the relationship between the peak area of scattered light after denoising using the denoising model and the peak area of CD147-derived fluorescence according to Example 12.

[Figure 44] Figure 44 is a scatter plot illustrating the relationship between the peak area of fluorescence derived from CD9 and the peak area of fluorescence derived from CD147 according to Example 12.

[Figure 45] Figure 45 is a graph illustrating the relationship between the concentration of extracellular vesicles and the CD9 positivity rate according to Example 12.

[Figure 46] Figure 46 includes graphs illustrating the proportion of markers in cancer patients and healthy individuals according to Example 12.

[Figure 47] Figure 47 is a graph illustrating a signal after denoising using a filter according to Example 13.

[Figure 48] Figure 48 is a graph illustrating PR curves of signals after denoising using filters according to Example 13.

**Description of Embodiments**

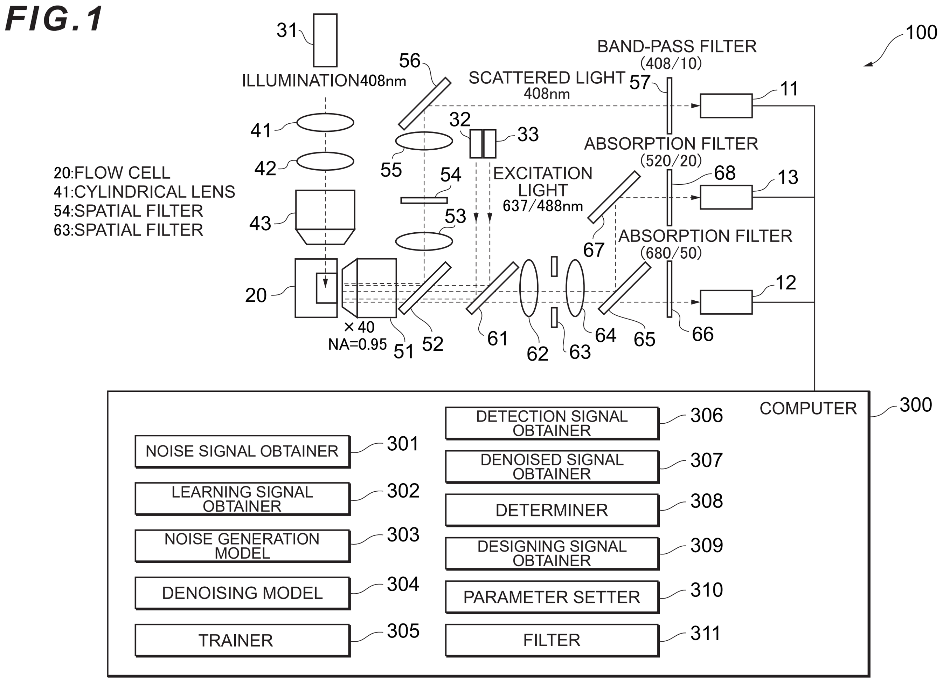

As illustrated in Figure 1, a detection system according to an embodiment includes a noise signal obtainer 301, which obtains, as a noise signal, a signal detected by a detector 11 in the absence of a detection target in the detection region, a trainer 305, which trains a denoising model 304 using the noise signal, a detection signal obtainer 306, which obtains, as a detection signal, a signal from a detection target detected by the detector 11, and a denoised signal obtainer 307, which inputs the detection signal into the trained denoising model 304 to obtain at least one denoised signal that has undergone denoising.

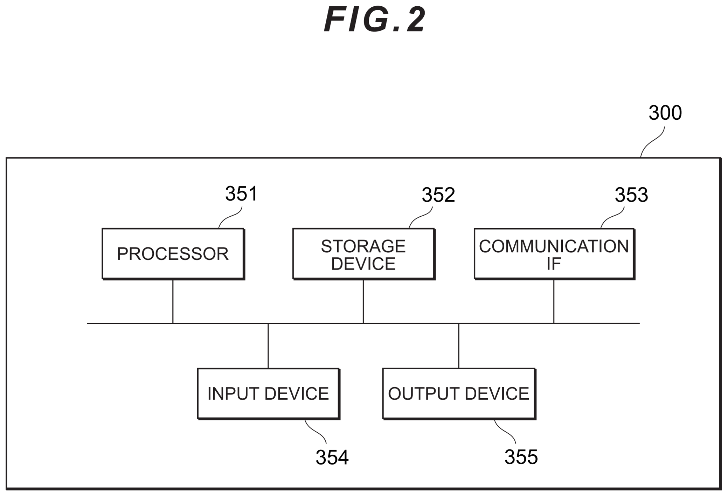

The noise signal obtainer 301, the denoising model 304, the trainer 305, the detection signal obtainer 306, and the denoised signal obtainer 307 may be included in a computer 300, for example. The noise signal obtainer 301, the denoising model 304, the trainer 305, the detection signal obtainer 306, and the denoised signal obtainer 307 are implemented in the computer 300 by a processor 351 executing a program stored in a storage device 352 as illustrated in Figure 2. The same applies to other functional units that may be included in the computer 300 described below.

The processor 351 is a circuit, and examples of the processor 351 include a central processing unit (CPU), a graphics processing unit (GPU), a general-purpose GPU (GPGPU), a digital signal processor (DSP), an application-specific integrated circuit (ASIC), and a field programmable gate array (FPGA), and may be a combination of these. For example, a GPU is suitable for large-scale and complex calculation processing, while an FPGA is suitable for calculation processing that requires high throughput.

Examples of the storage device 352 include a random-access memory (RAM), a read-only memory (ROM), a hard disk drive (HDD), and a solid state drive (SSD), and may be a combination of these.

The computer 300 may further include a network interface 353 for wired or wireless communication, an input device 354 for accepting input operations, and an output device 355 for outputting information. Examples of the input device 14 include a keyboard, a touch panel, a mouse, and a microphone. Examples of the output device 15 include a display, a touch panel, and a speaker. The computer 300 may be configured to be connected to a network such as the internet or wired or wireless communication via the network interface 353, and to obtain signals from the detector 11 and the like via the network.

The detector 11 may be a photodetector, for example. For example, the detector 11 may be included in a detection apparatus 100. For example, the detection apparatus 100 may be an optical detection apparatus. For example, the detection apparatus 100 may be a particle detection apparatus. For example, the particle detection apparatus may be an optical particle detection apparatus. The detection apparatus 100 may be any of a variety of optical detection apparatuses, such as, but not limited to, a flow cytometer or an image cytometer. The detection apparatus 100 includes a flow cell 20, through which a solution flows, and a light source 31, which applies light to the flow cell 20. The wavelength of the light emitted by the light source 31 may be 408 nm, but is not particularly limited to this. The detector 11 detects scattered light generated at a detection target such as particles in the solution flowing inside the flow cell 20 due to the light emitted from the light source 31. The wavelength of the scattered light is the same as the wavelength of the light emitted from the light source 31. In the flow cell 20, a laminar flow is formed, consisting of a flow of sample fluid containing the detection target and a flow of sheath fluid surrounding the sample fluid. The flow cell 20 and the pumps that send the sample fluid and the sheath fluid to the flow cell 20 are set such that the diameter of the sample fluid in a cross section of the flow cell 20 allows the detection target to be detected one by one.

For example, the detection apparatus 100 may include cylindrical lenses 41 and 42, through which the light emitted by the light source 31 passes, and an objective lens 43, which focuses the light onto the flow cell 20, in the optical path between the light source 31 and the flow cell 20. The objective lens 43 focuses the light so as to form a spot larger than the diameter of the sample fluid in a cross section of the flow cell 20. For example, the detection apparatus 100 may also include, in the optical path between the flow cell 20 and the detector 11, an objective lens 51, which converts scattered light emitted from the detection target in the flow cell 20 into parallel light, a half mirror 52, which reflects the scattered light, a lens 53, through which the scattered light reflected by the half mirror 52 passes, a spatial filter 54, which eliminates spatial noise from the scattered light that has passed through the lens 53, a lens 55, through which the scattered light that has passed through the spatial filter 54 passes, a mirror 56, which reflects the scattered light that has passed through the lens 55, and a wavelength filter 57, which eliminates light of a partial wavelength band from the scattered light reflected by the mirror 56. For example, the wavelength filter 57 may be a band-pass filter.

The detection apparatus 100 may further include an optical system for detecting a fluorescently labeled detection target in the solution flowing inside the flow cell 20. For example, the detection apparatus 100 may include a light source 32, which applies first excitation light having a first wavelength to the flow cell 20, and a detector 12, which detects first fluorescence emitted by first fluorescent molecules to which the first excitation light is applied. For example, the detection apparatus 100 may also include a light source 33, which applies second excitation light having a second wavelength to the flow cell 20, and a detector 13, which detects the second fluorescence emitted by second fluorescent molecules to which the second excitation light is applied.

For example, the detection apparatus 100 may include a half mirror 61, which reflects the first excitation light and the second excitation light, in the optical path between the light source 32 and the flow cell 20 and between the light source 33 and the flow cell 20. The first excitation light and the second excitation light reflected by the half mirror 61 are transmitted through the half mirror 52 and are focused into the flow cell 20 by the objective lens 51. The first fluorescence emitted from the fluorescent molecules labeling the detection target flowing through the flow cell 20 is converted into parallel light by the objective lens 51 and transmitted through the half mirror 52 and the half mirror 61.

For example, the detection apparatus 100 may include a lens 62, through which the first fluorescence transmitted through the half mirror 61 passes, a spatial filter 63 for eliminating spatial noise from the first fluorescence transmitted through the lens 62, a lens 64, through which the first fluorescence transmitted through the spatial filter 63 passes, a half mirror 65, through which the first fluorescence transmitted through the lens 64 passes, and a wavelength filter 66 for eliminating light of a partial wavelength band from the first fluorescence transmitted through the half mirror 65. For example, the spatial filter 63 is arranged at a conjugate image plane and eliminates light other than that from the detection target. The size of the spatial filter 63 may be 4 $\mu$m, for example, but is not particularly limited because this size may vary depending on other elements of the optical system. For example, the wavelength filter 66 may be an absorption filter that does not allow excitation light or scattered light to pass through.

The second fluorescence is transmitted through the half mirror 61, and passes through the lens 62, the spatial filter 63, and the lens 64. The second fluorescence is reflected by the half mirror 65. For example, the detection apparatus 100 may include a mirror 67, which reflects the second fluorescence reflected by the half mirror 65, and a wavelength filter 68, which eliminates light of a partial wavelength band from the second fluorescence reflected by the mirror 67. For example, the wavelength filter 66 may be an absorption filter that does not allow excitation light or scattered light to pass through.

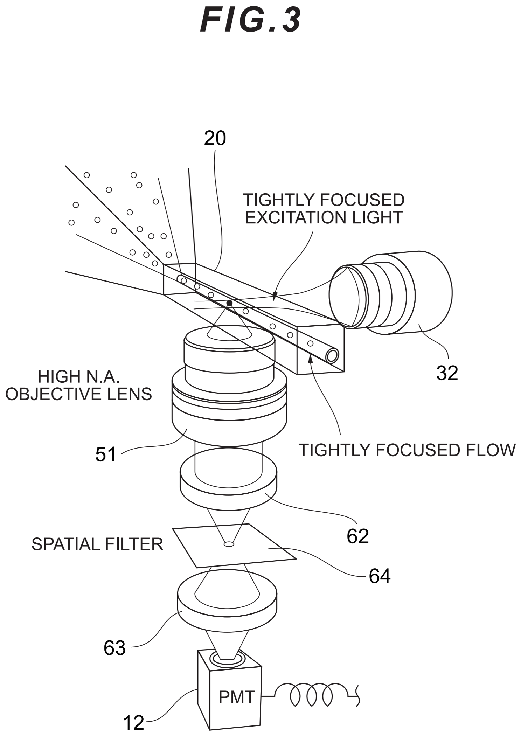

The optical system may be arranged freely. For example, as illustrated in Figure 3, fluorescence emitted in a direction perpendicular to the optical axis of the excitation light may be detected.

The noise signal obtainer 301 obtains, as a noise signal, a signal detected by the detector 11 when a solution not containing the detection target flows through the flow cell 20 of the detection apparatus 100. Alternatively, the noise signal obtainer 301 obtains, as a noise signal, a signal detected in a state other than when the detector 11 detects the detection target while a solution including the detection target flows in the flow cell 20 of the detection apparatus 100. For example, when the detection targets flow in the flow cell 20 at intervals, the noise signal obtainer 301 obtains, as a noise signal, a signal between the times at which the detector 11 detects two detection targets. The noise signal obtainer 301 stores the noise signal in the storage device 352, for example. The noise signal is a time-series signal. For example, the noise signal may be a one-dimensional signal. For example, noise may be generated depending on the solution, the environment, and the apparatus. The solution not containing the detection target may be water, for example, and may be pure water or ultrapure water. The solution not containing the detection target may be a phosphate buffer solution or a sheath fluid.

The detection system according to the embodiment may further include a learning signal obtainer 302, which obtains a signal from a learning target detected by the detector 11 as a signal for learning. The learning signal obtainer 302 may be included in the computer 300, for example. The learning signal obtainer 302 obtains, as a signal for learning, a signal detected by the detector 11 when a solution containing a learning target flows through the flow cell 20 of the detection apparatus 100. The learning signal obtainer 302 stores the signal for learning in the storage device 352, for example. The signal for learning is a detection signal of scattered light from the learning target. The signal for learning is a time-series signal. For example, the signal for learning may be a one-dimensional signal. The learning target is a detection target used for learning. The learning target is not particularly limited as long as it is an object that generates scattered light due to the light emitted by the light source 31. The learning target may be a particle, for example. When the learning target and the detection target are particles, the particle size of the learning target is preferably close to the particle size of the detection target. The learning target may be a resin bead or an inorganic bead such as a metal bead.

When a solution containing a target flows through the flow cell 20, the detection signal detected by the detector 11 is a time-series signal that contains noise. The detection signal x, which contains noise and is given by Expression (1), can be considered as a sum of the noise-free signal s derived from the target, given by Expression (2), and the background noise n that does not include a signal derived from the target, given by Expression (3). The signal s and the background noise n are also time-series signals.

[Math. 1]

$$x = s + n, \; x \in R^T \quad (1)$$

(1)

[Math. 2]

$$s \in R^T \quad (2)$$

[Math. 3]

$$n \in R^T \quad (3)$$

Here, T is the length of the time series, and the noise n follows a probabilistic noise distribution p(n) given by Expression (4), for example.

[Math. 4]

$$p_\eta(n) = p_\eta\big(n(1)\big) \prod_{t=2}^{T} p_\eta\big(n(t)|n(< t)\big) \quad (4)$$

Here, n(t) is the noise at time t, and n(< t) is the noise before time t.

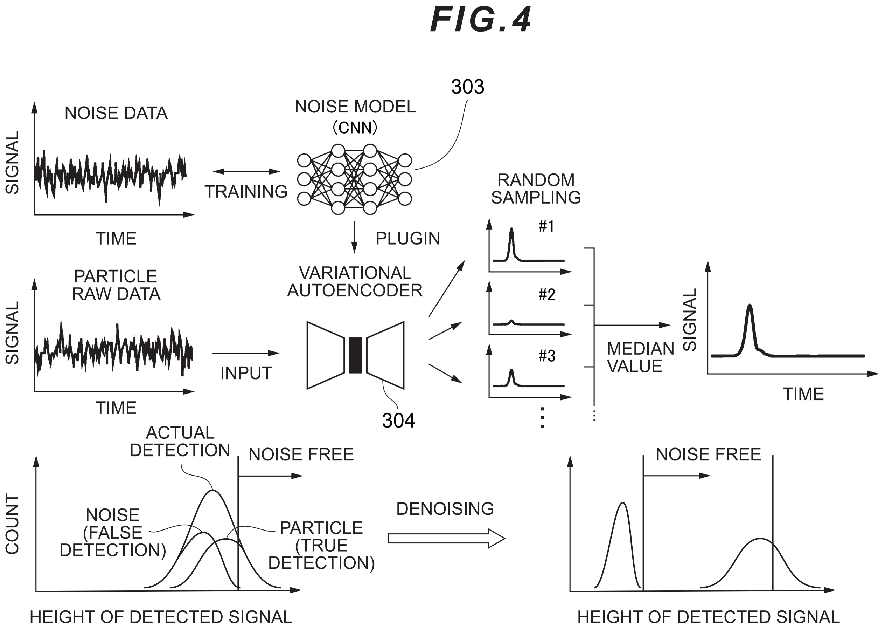

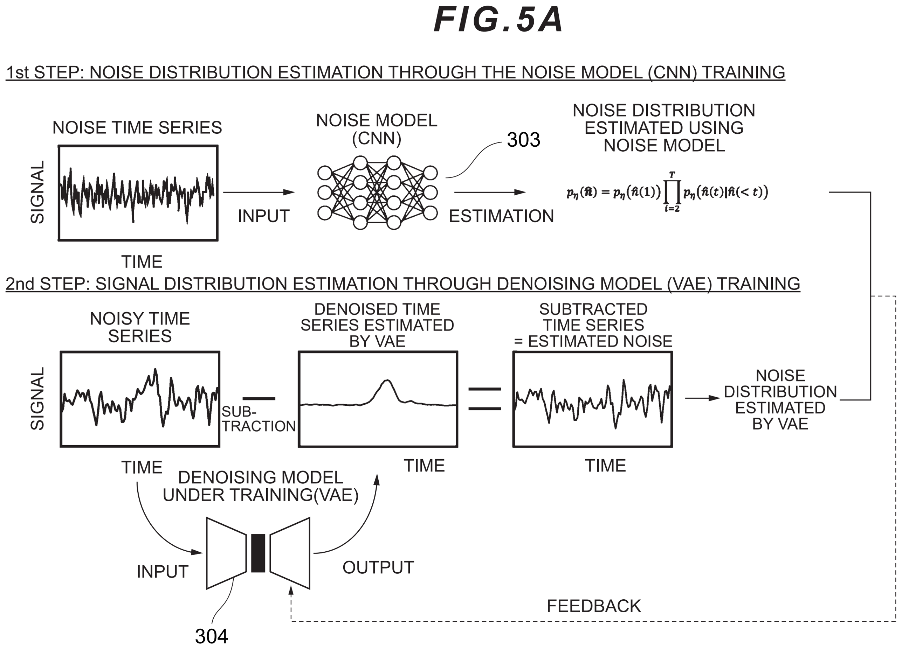

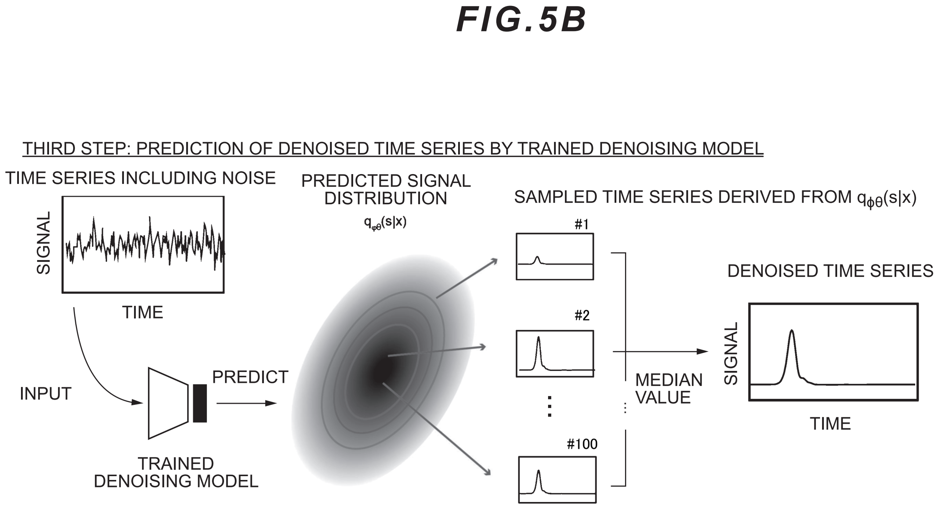

The detection system according to the embodiment may further include a noise generation model 303, which extracts features from an actually detected noise signal and generates a noise estimation signal. The noise generation model 303 may be included in the computer 300, for example. For example, the noise generation model 303 may be an unsupervised machine learning model, and includes a neural network. The neural network may be a convolutional neural network (CNN), for example. The noise generation model 303 may be a probabilistic noise generation model that is based on CNN-based autoregressive deep learning. As illustrated in Figures 4 and 5, the noise generation model 303 generates a probabilistic noise distribution p(n) given by Expression (4) as a noise estimation signal, for example. The noise generation model 303 may store the noise estimation signal in the storage device 352, for example.

The noise generation model 303 illustrated in Figure 1 is trained by unsupervised learning using a noise signal containing only background noise given by Expression (5). The noise signal is a signal detected by the detector 11 when a solution not containing the detection target flows through the flow cell 20 of the detection apparatus 100. The noise signal may be read from the storage device 352. The trained noise generation model 303 receives the noise signal as input and outputs a noise estimation signal. The noise estimation signal is used to train the denoising model 304.

[Math. 5]

$$n \sim p(n) \quad (5)$$

For example, the denoising model 304 may be an unsupervised machine learning model, and includes a neural network. For example, the denoising model 304 may implement a deep learning-based one-dimensional (1D) unsupervised denoising method. The denoising model 304 may include an autoencoder. The autoencoder may be a variational autoencoder (VAE). The denoising model 304 is trained by unsupervised learning using signals for learning including signals from the learning target given by Expression (6). The signal for learning is a signal detected by the detector 11 when a solution containing a learning target flows through the flow cell 20 of the detection apparatus 100. The signal for learning may be read from the storage device 352. The denoising model 304 receives the signal for learning that is actually detected as input, extracts the peak characteristics of the scattered light of the learning target, and outputs a denoised signal for learning from which noise has been cancelled. The denoising model 304 may store the denoised signal for learning in the storage device 352, for example.

[Math. 6]

$$x \sim p(x) \quad (6)$$

The trainer 305 illustrated in Figure 1 reads out the signal for learning and the denoised signal for learning from the storage device 352, for example. As illustrated in Figure 5, the trainer 305 generates a differential signal, which is the difference between the signal for learning and the denoised signal for learning. The differential signal may be considered as a noise estimation signal generated by the denoising model 304. The trainer 305 evaluates the likelihood of the differential signal, which is the noise estimation signal generated by the denoising model 304, on the basis of the noise estimation signal generated by the noise generation model 303. The trainer 305 feeds back the result of the evaluation to the denoising model 304 to train the denoising model 304. For example, the denoising model 304 is trained such that the value of a loss function indicating the difference between the noise estimation signal generated by the noise generation model 303 and the noise estimation signal generated by the denoising model 304 is small.

It is difficult to actually obtain noise-free scattered light signals as training data. In contrast, the above training method can, without using noise-free scattered light signals as training data, train the denoising model 304 and improve the accuracy of the denoising model 304 by evaluating the likelihood of the differential signal, which is the noise estimation signal generated by the denoising model 304, on the basis of the noise estimation signal generated by the noise generation model 303.

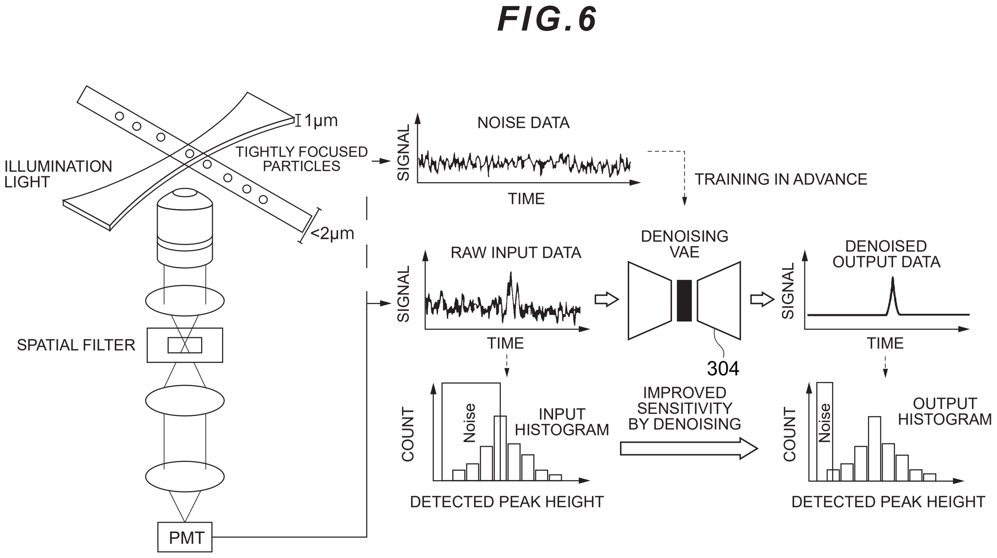

As illustrated in Figure 6, the trainer 305 may train the denoising model 304 using the noise signal instead of the noise estimation model generated by the noise generation model 303. In this case, the detection system does not include the noise generation model 303, and the noise signal may be input to the denoising model 304 to train the denoising model 304. After training the denoising model 304 using the noise signal, the denoising model 304 may be trained using the signal for learning.

The detection signal obtainer 306 illustrated in Figure 1 obtains, as a scattered light detection signal, a signal detected by the detector 11 when a solution containing the detection target flows through the flow cell 20 of the detection apparatus 100. The detection signal obtainer 306 may store the scattered light detection signal in the storage device 352, for example. The scattered light detection signal is a time-series signal. For example, the detection signal may be a one-dimensional signal. For example, the detection target may be a particle. For example, the detection target may be particles, the presence or absence of which and the number of which are to be measured by the detection system. The detection target may be biomolecules. Examples of biomolecules include extracellular vesicles. The detection target may be a cell or a microorganism. The solution containing the detection target may be a biological solution. Examples of biological solution include serum, plasma, or interstitial fluid. The serum, plasma, or interstitial fluid may be unpurified. The detection target may be a non-biological particle such as ink particles or chemical particles.

Furthermore, the detection signal obtainer 306 obtains, as a first fluorescence detection signal, the signal detected by the detector 12 when a solution containing the detection target flows through the flow cell 20 of the detection apparatus 100, and obtains, as a second fluorescence detection signal, the signal detected by the detector 13. For example, the detection signal obtainer 306 stores the first fluorescence detection signal and the second fluorescence detection signal in the storage device 352. The first fluorescence detection signal and the second fluorescence detection signal are time-series signals.

As illustrated in Figure 5, the trained denoising model 304 receives a scattered light detection signal as input and outputs one or more scattered light denoised signals. The scattered light detection signal may be read out from the storage device 352. The denoising model 304 may store the denoised signal in the storage device 352. The scattered light denoised signal is a time-series signal. The number of scattered light denoised signals may be 10, 20, 40, 80, 100, 120, 160, or 200 for example, but is not particularly limited. For example, the denoising model 304 may randomly collect a plurality of scattered light denoised signals. For example, the denoising model 304 may output the median value of the plurality of scattered light denoised signals as the scattered light denoised signal.

The detection system according to the embodiment may further include a determiner 308, which determines the type of the detection target. For example, the determiner 308 determines whether scattered light and fluorescence are detected simultaneously. The determiner 308 receives the scattered light denoised signal from the denoising model 304, and receives the first fluorescence detection signal and the second fluorescence detection signal from the detection signal obtainer 306.

When the detector 11 detects scattered light, the detector 12 detects the first fluorescence, and the detector 13 detects the second fluorescence at the same time, the determiner 308 may determine that a detection target emitting the first fluorescence and the second fluorescence has flowed through the flow cell 20.

When the detector 11 detects scattered light, the detector 12 detects the first fluorescence, and the detector 13 does not detect the second fluorescence at the same time, the determiner 308 may determine that a detection target emitting only the first fluorescence has flowed through the flow cell 20. When the detector 11 detects scattered light, the detector 12 does not detect the first fluorescence, and the detector 13 detects the second fluorescence at the same time, the determiner 308 may determine that a detection target emitting only the second fluorescence has flowed through the flow cell 20.

When the detector 11 detects scattered light, the detector 12 does not detect the first fluorescence, and the detector 13 does not detect the second fluorescence at the same time, the determiner 308 may determine that a detection target that does not emit the first fluorescence or the second fluorescence has flowed through the flow cell 20. When the detector 11 does not detect scattered light, and the detector 12, 13 detects the first fluorescence or the second fluorescence at the same time, the determiner 308 may determine that the fluorescence is not derived from the detection target.

For example, the determiner 308 may store the determination result in the storage device 352. The method by which the determiner 308 determines the detection target is not limited to the above method. For example, the determiner 308 may determine the type of the detection target on the basis of a modulated transmission speckle pattern generated at the detection target illuminated with structured illumination, which will be described below.

As illustrated in Figure 1, the detection system according to the embodiment may further include a designing signal obtainer 309, which obtains a signal for designing and a denoised signal for designing obtained by inputting the signal for designing into the trained denoising model 304, a filter 311, and a parameter setter 310, which sets parameters of the filter 311 such that a signal output by processing the signal for designing with the filter 311 approximates the denoised signal for designing.

The designing signal obtainer 309 obtains, as a signal for designing, a signal detected by the detector 11 when a solution containing a detection target for designing flows through the flow cell 20 of the detection apparatus 100. The designing signal obtainer 309 stores the signal for designing in the storage device 352. The signal for designing is a detection signal of light scattered by a target. The signal for designing is a time-series signal. For example, the signal for designing may be a one-dimensional signal. The signal for designing may be the same as the signal for learning, and the denoised signal for designing may be the same as the denoised signal for learning. Alternatively, the signal for designing may be the same as a detection signal that is previously detected, and the denoised signal for designing may be the same as the denoised signal. For example, the designing signal obtainer 309 reads out the denoised signal for learning or the denoised signal stored in the storage device 352 as the denoised signal for designing.

For example, the parameter setter 310 sets the parameters of the filter 311 such that the difference between a signal output by processing the signal for designing using the filter 311 and the denoised signal for designing is small. The filter 311 may be a kernel, for example. The kernel may have any size. The filter 311 may be a convolution filter. The convolution filter may be a one-dimensional convolution filter, for example. For example, the parameter setter 310 sets the weight of the kernel such that a signal output by processing the signal for designing with the kernel approximates the denoised signal for designing. The parameter setter may set the weight of the kernel such that the difference between a signal output by processing the signal for designing with the kernel and the denoised signal for designing is small, for example. The filter 311 whose parameters are set by the parameter setter 310 is stored in the computer 300.

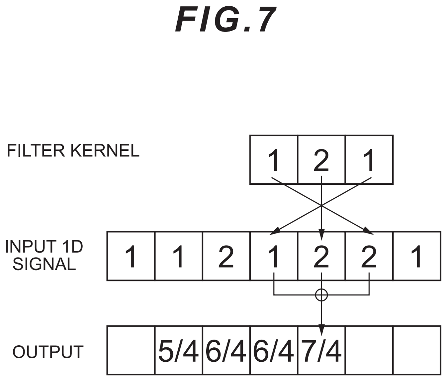

The denoised signal obtainer 307 may input the detection signal into the filter 311 instead of inputting it into the denoising model 304, to obtain a denoised signal that has undergone denoising, for example. As illustrated in Figure 7, the denoised signal obtainer 307 may input the detection signal into the filter 311, which is a kernel, and convolves the filter 311, which is a kernel, with the detection signal to obtain a denoised signal that has undergone denoising, for example. Although Figure 7 schematically illustrates an example of a kernel size of $1 \times 3$, the kernel size is not limited to this and may be $1 \times 100$, $1 \times 1000$, or $1 \times 2000$, for example. The filter 311 places a smaller load on the computer 300 than the denoising model 304 and can output a denoised signal faster than the denoising model 304. For this reason, denoising with the filter 311 is suitable for detecting the detection target in real time with high throughput. For example, denoising with the filter 311 is suitable for sorting the detection targets in real time with a sorter according to the type of detection target, as will be described below.

The detection system according to the embodiment can cancel noise from the detection signal, and thus can detect peaks that have been hidden in noise. As such, the detection system according to the embodiment can detect, with high sensitivity, targets that are contained at low concentrations in a solution and targets that are small particles with weak scattered light intensity. For example, conventional flow cytometry, which has low sensitivity, requires pre-processing to separate the detection target in advance by ultracentrifugation, size exclusion chromatography, affinity purification, or the like. In contrast, the detection system according to the embodiment has high sensitivity, eliminating the need for such pre-processing. Furthermore, in the above method, an example of a method for cancelling noise from a scattered light detection signal has been described, but it is also possible to cancel noise from a fluorescence detection signal using a similar method.

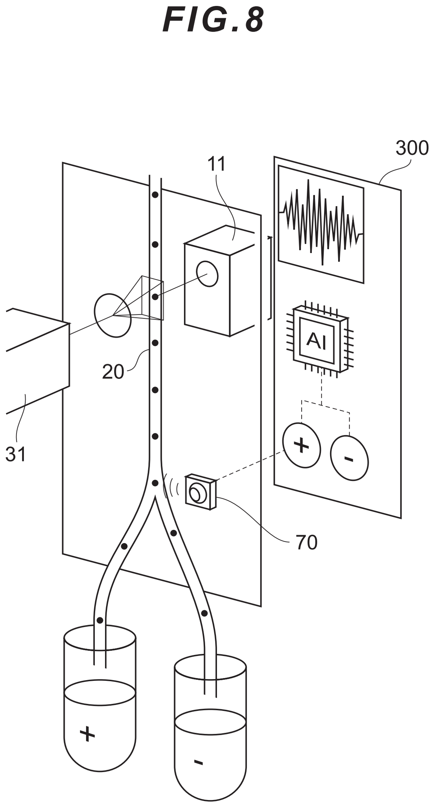

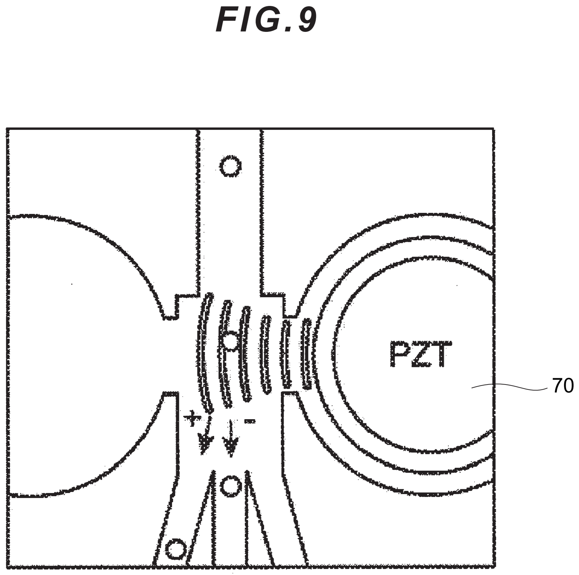

As illustrated in Figures 8 and 9, the detection system according to the embodiment may further include a sorter 70, which sorts the targets determined by the determiner 308 into one or more groups on the basis of the determination result. The sorter 70 may include an actuator such as a piezoelectric unit. For example, the actuator may include lead zirconate titanate (PZT). For example, the sorter 70 may sort the detection targets by actuating the actuator to direct or redirect the flow of fluid containing the detection targets from one channel connected to the flow cell 20 to another channel or channels. The actuator may apply pressure pulses to the fluid via an ultrasonic signal, for example.

Although the present invention has been described above with reference to the embodiment, the descriptions and drawings that form part of this disclosure should not be understood as limiting the present invention. For example, a detection apparatus according to the embodiment may include a patterned optical structure for generating structured illumination from light from a light source. Light from a light source may be directed through an optical structure to focus structured illumination onto a channel of the flow cell, causing the structured illumination to generate a transmitted speckle pattern from the channel to a detector.

When at least one of multiple detection targets is passed through the channel of the flow cell onto which the structured illumination is focused, the transmitted speckle pattern is modulated to generate a modulated transmitted speckle pattern. A detector is used to collect at least a portion of the modulated transmitted speckle pattern. At least a portion of the modulated transmitted speckle pattern is converted into one or more time waveforms. The one or more time waveforms include one or more intensity distributions imparted by the modulated transmitted speckle pattern resulting from the passage of at least one detection target through structured illumination. The time waveform is denoised by the method described above.

One or more machine learning classifiers may be applied to one or more denoised time waveforms to directly identify one or more detection targets from multiple detection targets, and the sorter may separate or isolate the one or more detection targets from the multiple detection targets. The machine learning classifier is trained in advance based on the shape of the detection target and the time waveform corresponding to the shape. Furthermore, one or more denoised time waveforms may be used to reconstruct a two-dimensional or three-dimensional image of the detection target, as in the imaging mode described below.

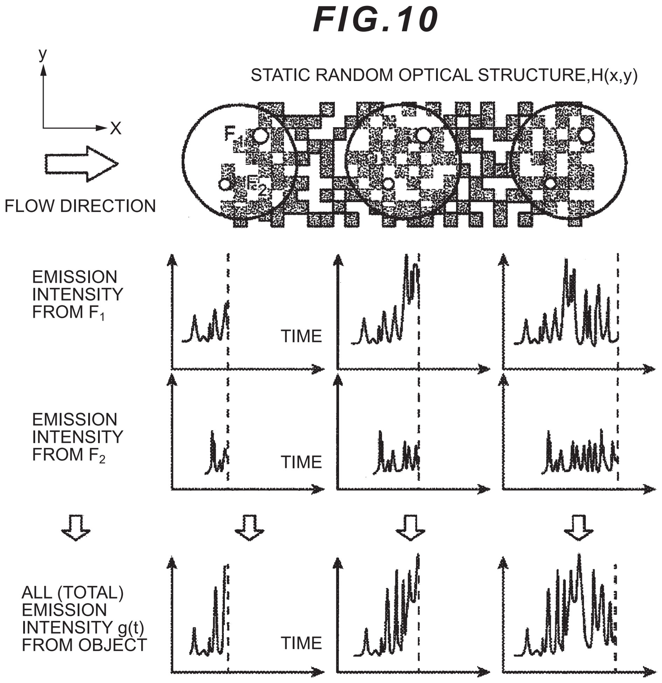

The relative motion of the detection target across the structured illumination can be used to compressively map the spatial information of the detection target into a time signal sequence. A patterned optical structure may be defined by a matrix H(x, y) that includes values of optical properties (such as transmittance, absorptance, reflectance, or indicators thereof) in each region within the optical structure. As illustrated in Figure 10, F1 and F2 may depict representative features within the detection target. An example of a feature is a fluorescence feature. Based on the motion of the detection target, the spatially varying optical properties of H(x, y) can be encoded as temporal modulation of the light intensities from fluorophores F1 and F2. The light intensity may be the fluorescence emission intensity, for example. In Figure 10, these are indicated as "emission intensity from F1" and "emission intensity from F2."

Their total g(t) can be recorded using a detector, as illustrated in the bottom part of Figure 10. In imaging mode, a two-dimensional (2D) image of the detection target can be reconstructed by a computer using a combination of the multiplexed time waveform g(t) and the intensity distribution H(x, y) of the optical structure. In image-free mode, a machine learning method can be applied directly to compressed time waveforms, resulting in high-throughput, highly accurate, image-free, morphology-based cell classification.

When a detection target passes through the structured illumination, each spot positioned within the structure may be at sequentially different locations of the detection target. For example, the spots positioned in the structure can sequentially excite fluorophores that are present at different positions of the detection target. The encoded intensity from each position may be multiplexed as a single time waveform detected using a detector, and may be detected in a compressed and continuous manner. Assuming that the detection target undergoes uniform one-direction motion at velocity v, signal obtaining can be mathematically expressed by the following Expression (7).

[Math. 7]

$$g(t) = \iint H(x,y)I(x - vt, y)dxdy \qquad (7)$$

In the above Expression (7), g(t) is a multiplexed time waveform, H(x, y) is an intensity distribution of the optical structure, and I(x, y) is an intensity distribution of the moving detection target. H(x, y), which acts as a spatial encoding operator, may be static, so that scanning or continuous light projection may not be required. The detection target may be convolved with the optical structure along the x-direction, and the resulting signal may be integrated along the y-direction. Randomized convolution can be considered as an imaging modality. When Expression (7) is given as a forward model, the image reconstruction process involves solving an inverse problem. The solution can be iteratively estimated by minimizing an objective function that can be calculated by combined use of the multiplexed time waveform g(t) and the intensity distribution H(x, y) of the optical structure. For sparse events in the regularized domain, the moving detection target can be reasonably estimated from the detected signal g(t) by employing a compressive sensing algorithm such as Two-Step Iterative Shrinkage/Thresholding (TwIST).

The patterned optical structure may be a diffractive optical element (DOE). Alternatively, the patterned optical structure may include a spatial light modulator (SLM), a digital micromirror device (DMD), a liquid crystal (LC) device, or a photomask.

The patterned optical structures can be fabricated using a micro-fabrication or nano-fabrication technique. For example, the patterned optical structures may be fabricated using any one or more of solvent cleaning, piranha cleaning, RCA cleaning, ion implantation, ultraviolet photolithography, deep ultraviolet photolithography, extreme ultraviolet photolithography, electron beam lithography, nanoimprint lithography, wet chemical etching, dry chemical etching, plasma etching, reactive ion etching, deep reactive ion etching, electron beam milling, thermal annealing, thermal oxidation, thin film deposition, chemical vapor deposition, molecular organic chemical vapor deposition, low pressure chemical vapor deposition, plasma enhanced chemical vapor deposition, physical vapor deposition, sputtering, atomic layer deposition, molecular beam epitaxy, electrochemical vapor deposition, wafer bonding, wire bonding, flip chip bonding, thermosonic bonding, wafer dicing, or other microfabirication or nanofabrication manufacturing techniques.

The patterned optical structure may include a regular patterned optical structure. The regular patterned optical structure may include a periodic arrangement of regions of different optical properties or another regular arrangement. The patterned optical structure may include a disordered patterned optical structure. The disordered patterned optical structure may include a disordered arrangement of regions of different optical properties. The patterned optical structure may include a non-periodic patterned optical structure. The non-periodic patterned optical structure may include a non-periodic arrangement of regions of different optical properties. The patterned optical structures may include randomly or pseudo-randomly patterned optical structures. The randomly or pseudo-randomly patterned optical structures may include a random or pseudo-random arrangement of regions of different optical properties.

A disordered or non-periodic optical structure, such as a randomly or pseudo-randomly patterned optical structure, can obtain optical spatial information with higher fidelity to the detection target under inspection, such as more accurate reconstruction of an image corresponding to the detection target, by reducing attenuation across frequencies or Fourier domains, for example. The signal detected using the systems and methods of the present disclosure can be considered as one-dimensional convolution of the patterned optical structure and the detection target under inspection. When the detected values are interpreted in the frequency domain, this can correspond, due to the convolution theorem, to multiplication of the Fourier transform of the patterned optical structure and the Fourier transform of the detection target under inspection. Accordingly, in order to detect optical spatial information corresponding to the detection target under inspection without attenuation, it may be advantageous to obtain a Fourier transform of the patterned optical structure that is close to a uniform distribution. The Fourier transform of a disordered or non-periodic function is a uniform distribution. Thus, a disordered or non-periodic patterned optical structure, such as a randomly or pseudo-randomly patterned optical structure, enables the obtainment of optical spatial information with higher fidelity to the detection target under inspection.

The detection system according to the embodiment is not limited to a flow cytometer and an image cytometer. For example, the detection system according to the embodiment may be a sequencer. For example, in a next-generation sequencer using the Sequencing by Synthesis (SBS) method, an extension reaction is carried out on a nucleic acid fragment for each base using fluorescently labeled dNTPs, and a fluorescence image is obtained for each extension reaction. Here, a fluorescence image captured by the detector while a sample is not placed is obtained as a noise signal. Also, a fluorescence image captured by the detector while a fluorescently labeled nucleic acid as a learning target is placed is obtained as a signal for learning. The method for training the noise generation model 303 and the denoising model 304 using the noise signal and the signal for learning, and the method for designing the filter 311 are as described above. Then, an image of the fluorescent screen captured by the detector while the nucleic acid as the detection target is placed is obtained as a detection signal, and the detection signal is processed with the denoising model 304 or the filter 311, allowing the fluorescence image of the next-generation sequencer to be denoised.

Furthermore, the detection apparatus according to the embodiment is not limited to an optical detection apparatus. For example, in a next-generation sequencer using the Ion Torrent method, a change in pH caused by H+ released for each amplification of a single base is detected. The change in pH is detected through a change in potential applied to a semiconductor. Here, a potential signal detected by the detector while no sample is placed is obtained as a noise signal. Also, a potential signal detected by the detector while an extension reaction of a base as the learning target is performed is obtained as a signal for learning. The method for training the noise generation model 303 and the denoising model 304 using the noise signal and the signal for learning, and the method for designing the filter 311 are as described above. Then, the potential signal detected by the detector while an extension reaction of a nuclei acid as the detection target is performed is obtained as a detection signal, and the detection signal is processed with the denoising model 304 or the filter 311, allowing the potential signal of the next-generation sequencer to be denoised.

In a nanopore sequencer, a single nucleic acid is passed through a nanopore, and a pair of electrodes placed in the nanopore is used to detect an ionic current between the electrodes. Because the ionic current flowing between the electrodes differs for each base, it is possible to identify the base sequence of the nucleic acid that has passed through the nanopore from the detected ionic current. When the detection system according to the embodiment is applied to a nanopore sequencer, a signal detected by a detector that detects a current flowing between the electrode pair in the absence of nucleic acid is obtained as a noise signal. Also, a signal detected by the detector while a nucleic acid as the learning target passes through the nanopore is obtained as a signal for learning. The method for training the noise generation model 303 and the denoising model 304 using the noise signal and the signal for learning, and the method for designing the filter 311 are as described above. Then, the signal detected by the detector while a nucleic acid as the detection target passes through the nanopore is obtained as a detection signal, and the detection signal can be denoised by processing the detection signal with the denoising model 304 or the filter 311.

In a peptide sequencer that uses a similar principle, a single peptide is passed between a pair of electrodes, and the ionic current between the pair of electrodes is detected. Because the ionic current flowing between the electrode pair differs for each amino acid, it is possible to identify the amino acid sequence of the peptide that has passed between the electrode pair from the detected ionic current. When the detection system according to the embodiment is applied to a peptide sequencer, a signal detected by a detector that detects a current flowing between the electrode pair in the absence of a peptide is obtained as a noise signal. Furthermore, a signal detected by the detector while a peptide as the learning target passes between the electrode pair is obtained as a signal for learning. The method for training the noise generation model 303 and the denoising model 304 using the noise signal and the signal for learning, and the method for designing the filter 311 are as described above. Then, the signal detected by the detector while a peptide as the detection target passes between the electrode pair is obtained as a detection signal, and the detection signal can be denoised by processing the detection signal with the denoising model 304 or the filter 311.

Furthermore, the detection apparatus according to the embodiment may be an electron microscope, for example. The electron microscope may be a transmission electron microscope (TEM) or a scanning electron microscope (SEM). When the detection apparatus according to the embodiment is a transmission electron microscope, an image of a fluorescent screen captured by a detector while a sample is not placed is obtained as a noise signal. Also, an image of the fluorescent screen captured by the detector while the learning target is placed is obtained as a signal for learning. The method for training the noise generation model 303 and the denoising model 304 using the noise signal and the signal for learning, and the method for designing the filter 311 are as described above. An image of the fluorescent screen captured by the detector while the detection target is placed is obtained as a detection signal, and the detection signal of the electron microscope can be denoised by processing the detection signal with the denoising model 304 or the filter 311.

When the detection apparatus according to the embodiment is a scanning electron microscope, an electron signal detected by the detector while a sample is not placed is obtained as a noise signal. Also, an electron signal detected by the detector while the learning target is placed is obtained as a signal for learning. The method for training the noise generation model 303 and the denoising model 304 using the noise signal and the signal for learning, and the method for designing the filter 311 are as described above. An electron signal detected by the detector while the detection target is placed is obtained as a detection signal, and the detection signal of the electron microscope can be denoised by processing the detection signal with the denoising model 304 or the filter 311.

Furthermore, the detection apparatus according to the embodiment may be an apparatus that detects a detection target using sound waves or electromagnetic waves. In this case, a sound wave or electromagnetic wave signal detected by the detector in the absence of a sample is obtained as a noise signal. Also, a sound wave or electromagnetic wave signal detected by the detector in the presence of a learning target is obtained as a signal for learning. The method for training the noise generation model 303 and the denoising model 304 using the noise signal and the signal for learning, and the method for designing the filter 311 are as described above. A sound wave or electromagnetic wave signal detected by the detector in the presence of the detection target is obtained as a detection signal, and the sound wave or electromagnetic wave signal can be denoised by processing the detection signal with the denoising model 304 or the filter 311. In this case, the detector may be a microphone or a radar.

As described above, various alternative embodiments, examples, and operational techniques should become apparent to those skilled in the art from this disclosure. It should be understood that the present invention encompasses various embodiments not described herein.

[Example 1: Machine Learning Model Training]

(Optical Particle Detection Apparatus)

An optical particle detection apparatus as illustrated in Figure 1 was prepared. The optical particle detection apparatus has a glass flow cell (Hamamatsu). A sheath flow was controlled at 1000 mbar using a pressure pump (Fluigent), and a sample flow was driven using a syringe pump (Harvard Apparatus). The channel size of the detection section of the flow cell was 75 $\mu$m $\times$ 75 $\mu$m, and the width of the sample flow passage was 1 $\mu$m to 2 $\mu$m in diameter.

To detect the fluorescence and scattered light emitted from nanoparticles flowing in the flow cell, the optical particle detection apparatus had a continuous wave laser with a wavelength of 408 nm (Vortran, Stradus 375; 200 mW), a continuous wave laser with a wavelength of 488 nm (Coherent, Sapphire 488; 500 mW), and a continuous wave laser with a wavelength of 637 nm (Vortran, Stradus 637; 140 mW).

The laser beam emitted from each laser formed a micron-sized elliptical spot inside the flow cell after passing through a cylindrical lens and an objective lens. The size of the elliptical spot formed by a laser beam of a wavelength of 408 nm was 2 $\mu$m $\times$ 5 $\mu$m, the size of the elliptical spot formed by a laser beam of a wavelength of 488 nm was 2 $\mu$m $\times$ 10 $\mu$m, and the size of the elliptical spot formed by a laser beam of a wavelength of 637 nm was 2 $\mu$m $\times$ 5$\mu$m. The energy density of the elliptical spot formed by the laser beam of a wavelength of 408 nm was 12.5 kW/mm$^2$.

The 408 nm laser beam was focused using a low NA objective lens (Nikon, T Plan EPI SLWD 10x; NA = 0.3), and the other laser beams were focused through a high NA objective lens (Olympus, UPLSAPO 40x; NA = 0.95). The fluorescence and scattered light emitted from particles were collected through a high NA objective lens.

A 4 $\mu$m spatial filter was placed at the conjugate image plane to transmit only the fluorescence and scattered light derived from the particles. Fluorescence and scattered light were detected using three photomultiplier tubes (PMTs, Hamamatus H10723) with a bandwidth of 1MHz. One PMT was used to detect scattered light, and two PMTs were used to detect fluorescence. The detection signals of the PMTs were sampled at 20 MHz using a digitizer (Spectrum, DN6.592-24).

(Data Analysis)

For all analyses, based on the peak positions detected in the time-series signal of scattered light, the peak height, peak area, and SN ratio were calculated from the time-series data of scattered light and fluorescence. For peak detection, the "peak detection" function of the SciPy Python library was used, and a peak detection algorithm based on maxima was applied. The peak detection algorithm operated in two stages. First, the time-series signal was differentiated, and peak positions at which the differential values inverted between positive and negative were recorded. Next, based on the peak height, which is the signal value at a detected peak position, a peak was considered as detected only when the height exceeded 2, which was set as the detection threshold for the SN ratio.

In Example 2 described below, the peaks detected in ground truth time-series data with an SN ratio exceeding 10 were treated as nanoparticle detection (ground truth labels). Also, peaks in the noisy time-series data and denoised time-series data were considered as true positives in a case where they appeared within 20 points (1 $\mu$s) of the nearest peak in the ground truth (true nanoparticle). Peaks separated by 20 points were considered false positives. When there was no peak within 20 points corresponding to the ground truth in the noisy time-series data and denoised time-series data, it was considered a false negative.

The SN ratio was calculated by dividing the signal height by the variance of background noise signal values continuously recorded at 1000 points. The signal area was calculated by integrating the signal values in the entire time window of 3 $\mu$s before and after the peak position.

(Preparation of Nanoparticle-Containing Solution)

Ultrapure water (Kanto Kasei) was filtered through a 20 nm filter (WATT MANN CO., LTD., Anotop), and fluorescent nanoparticles of 27 nm, 40 nm, and 110 nm (Thermo Fisher, FluoSpheres, registered trademark, Carboxylate-Modified Microspheres) were diluted in filtered ultrapure water to prepare a nanoparticle-containing fluid.

(Configuration of Noise Generation Model)

A noise generation model, which is a convolutional neural network (CNN), was configured as a seven-layer causal CNN using gated blocks from a conditional PixelCNN decoder. The noise generation model created causal convolution by performing padding before the start of the time series and used dilation instead of downsampling. Specifically, the second, fourth, and sixth layers used dilations of 2, 4, and 2, respectively. The convolutions had a kernel size of 7 and 8 filter channels. The log-likelihood loss was calculated using a two-component Gaussian mixture model.

(Configuration of Denoising Model)

The configuration of the denoising model, which is a convolutional neural network (CNN), was based on a hierarchical DivNoising model with some modifications. It was more effective to use eight latent variables in the hierarchy instead of six. However, increasing the number of latent variables to eight or more did not result in any additional benefit. The network of the denoising model consisted of a bottom-up path including batch normalization, ELU activation, convolution, and a gated residual block including gating, and a top-down path using a gated residual block preceding the sampling of latent variables. The configuration of the denoising model included eight layers, with resampling performed at each layer. Downsampling was achieved through stride convolution, and upsampling was achieved through nearest-neighbor interpolation. Downsampling was achieved using upsampling. For the convolution, 64 filters with a kernel size of 3 were used.

(Training of Noise Generation Model and Denoising Model)

First, particle-free ultrapure water was passed through the flow cell of the optical particle detection apparatus, and a time-series signal of scattered light detected for one second was obtained as a noise signal. Next, the nanoparticle-containing fluid was passed through the flow cell of the optical particle detection apparatus, and a time-series signal of scattered light detected over an arbitrary time was obtained as a signal for learning. The noise signal was used to train the noise generation model. Next, the differential signal between the denoised signal for learning, which was generated by the denoising model to which the signal for learning was input, and the signal for learning was evaluated using a noise estimation signal generated by the noise generation model, and the evaluation result was fed back to the denoising model to train the denoising model.

The noise generation model and the denoising model were trained with complete time series windows. The stationarity of the data was used by assuming that the entire time series can be modeled as a concatenation of smaller time series sampled from the same distribution. Specifically, the data used was one-second recording of the flow at a sampling rate of 20 MHz, generating a total of $2 \times 10^7$ data points. The noise generation model and the denoising model were trained to model windows containing $1 \times 10^3$ data points.

While training the noise generation model, the noise generation model used an Adamax optimizer with a learning rate of 0.002 and a scheduler that reduced the learning rate by a factor of 0.5 after 10 epochs with no change in the negative log-likelihood. The data was divided into non-overlapping windows of length 1000 and shuffled. An 80/20 split was used for training/validation, and the batch size was 32. Training was stopped when the negative log-likelihood plateaued at 50 epochs.

While training the denoising model, the denoising model used an Adamax optimizer with a learning rate of 0.0003 and a scheduler that reduced the learning rate by a factor of 0.1 when a loss plateau of 10 epochs occurred. The data was divided into windows of length 1000, shuffled, and split into 90/10 training/validation with a batch size of 32. Training was stopped after the reconstruction loss plateaued at 50 epochs.

[Example 2: Verification of Denoising Capability]

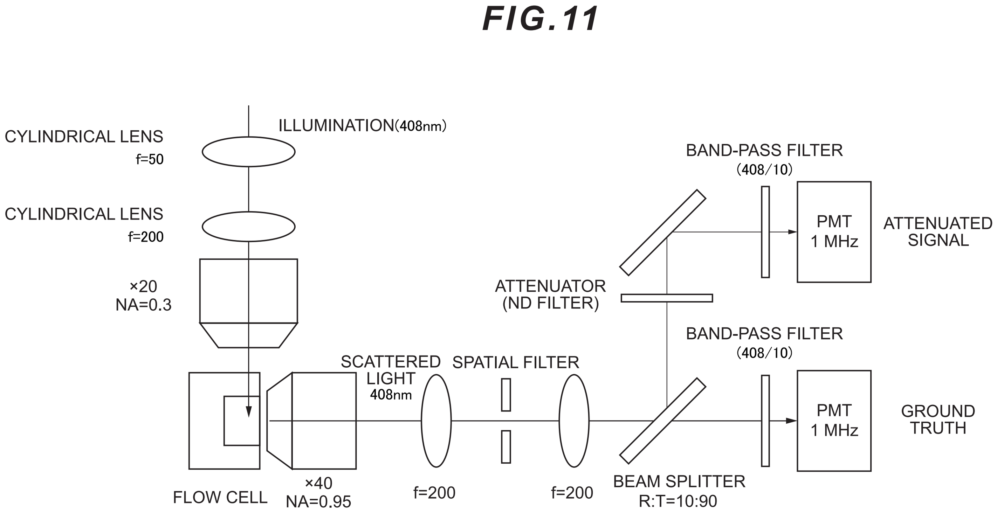

An optical particle detection apparatus as illustrated in Figure 11 was prepared. In the optical particle detection apparatus illustrated in Figure 11, scattered light generated by a nanoparticle-containing fluid flowing through the flow cell is split into two by a beam splitter. At the beam splitter, 10% of the scattered light is reflected, and 90% is transmitted. The scattered light reflected by the beam splitter is further attenuated by an attenuator including an ND filter, resulting in a reduced SN ratio, and is detected by a first detector. The electrical signal generated by the first detector is used as an attenuated signal. The signal with a high SN ratio that has passed through the beam splitter is detected by a second detector. The electrical signal generated by the second detector is used as a ground truth signal.

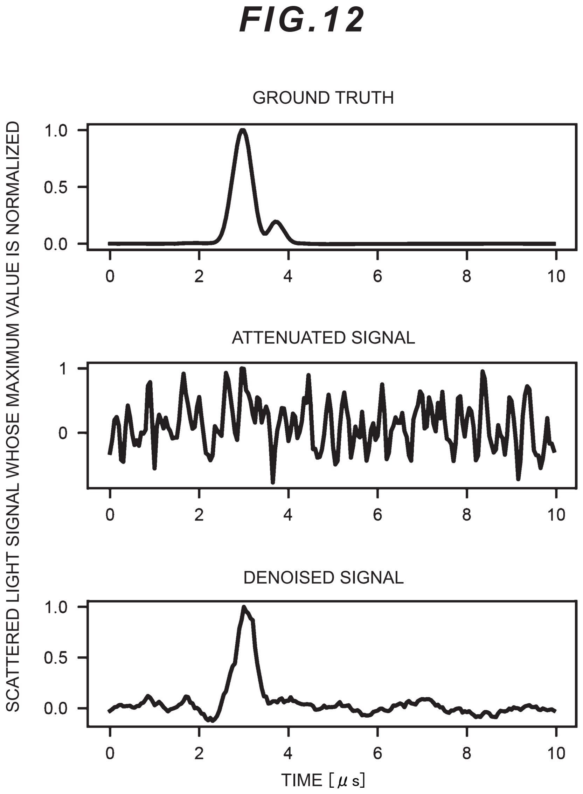

First, ultrapure water containing no nanoparticles was passed through the flow cell, and a one-second noise signal generated by the first detector was used to train the noise generation model. Next, a solution containing 110 nm polystyrene particles was passed through the flow cell, and a one-second attenuated signal generated by the first detector and a one-second ground truth signal generated by the second detector were obtained simultaneously. The ground truth signal is illustrated in the top part of Figure 12, and the attenuated signal is illustrated in the middle part of Figure 12. The denoising model was trained using the noise estimation signal output by the noise generation model and the attenuated signal. Next, the trained denoising model was used to generate the denoised signal illustrated in the lower part of Figure 12 by denoising the attenuated signal, and the denoised signal was compared with the ground truth signal. The denoised signal was similar to the ground truth signal.

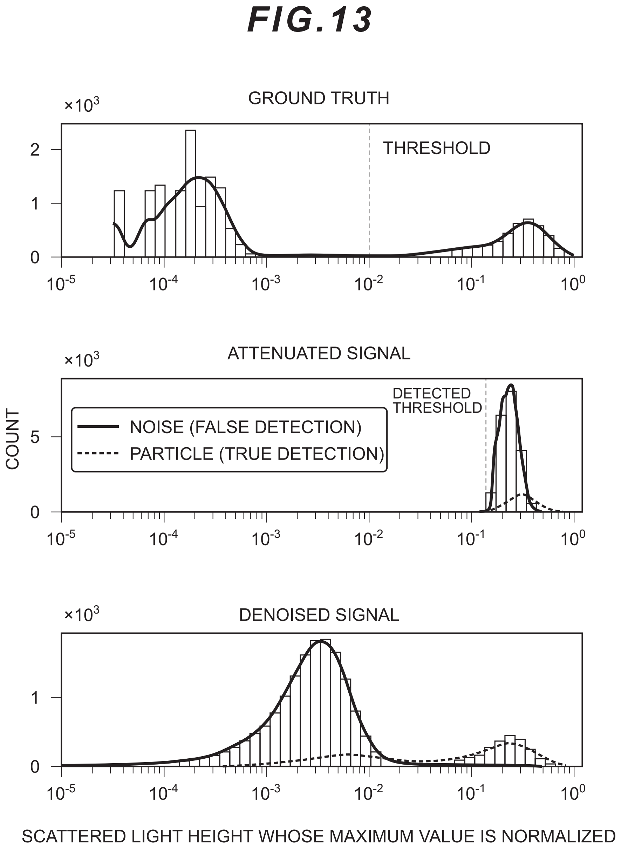

A local maximum peak detection algorithm was used to identify the position and height of the peaks in each of the ground truth signal, the attenuated signal, and the denoised signal. As illustrated in the upper part of Figure 13, in the ground truth signal, peaks having a height exceeding a threshold of 0.001 were considered peaks due to scattered light from true nanoparticles, and peaks below the threshold were considered peaks due to noise. As illustrated in the middle part of Figure 13, in the attenuated signal, the peaks due to scattered light were hidden in the peaks due to noise, and it was not possible to distinguish the peaks due to scattered light from the peaks due to noise. As illustrated in the lower part of Figure 13, in the denoised signal, the peaks due to scattered light and the peaks due to noise were separated, and the peaks due to scattered light in the denoised signal appeared at the same positions as the peaks due to scattered light in the ground truth signal.

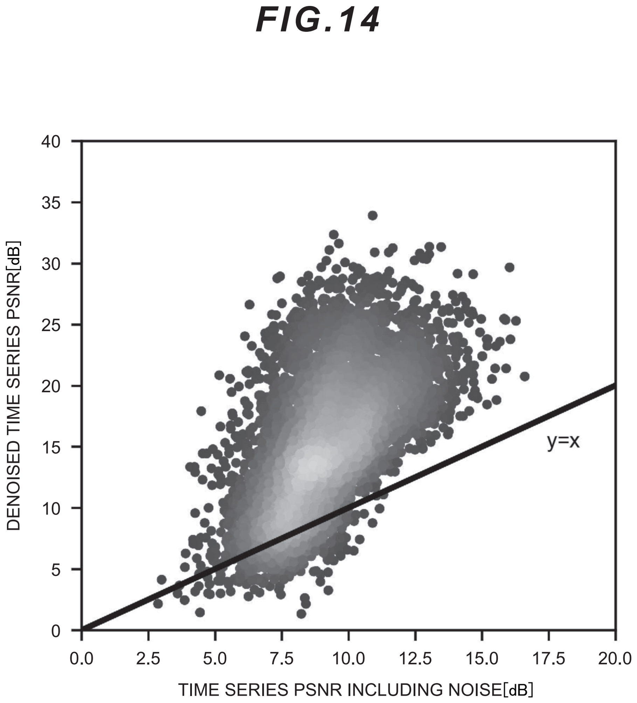

Next, the correlation between the peak signal-to-noise ratio (PSNR) of the attenuated signal and the PSNR of the denoised signal was calculated. As illustrated in Figure 14, data points were plotted with the PSNR of the attenuated signal on the horizontal axis and the PSNR of the denoised signal on the vertical axis. The points above the line marked y = x in the drawing represent improved PSNR, indicating improved accuracy in particle detection.

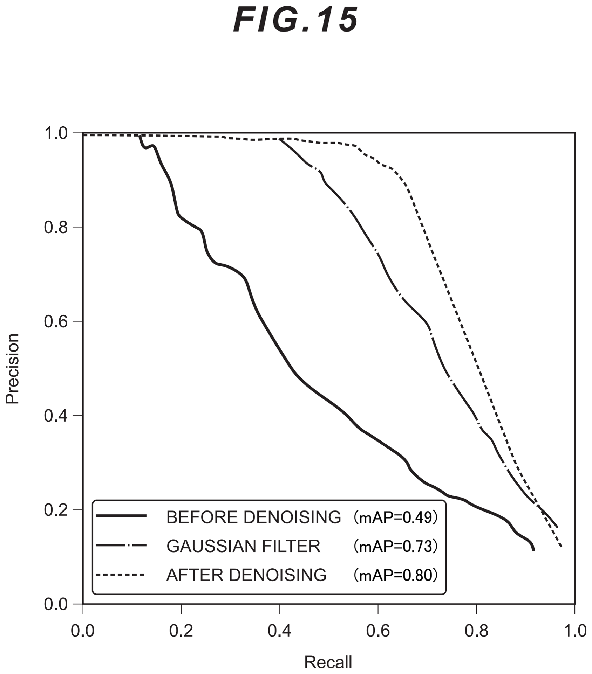

Next, the threshold for identifying peaks was increased stepwise from 0 to 1 in 1000 steps, and the precision-recall curves (PR curves) illustrated in Figure 15 were calculated. In Figure 15, the mean Average Precision (mAP) represents the area of the region under the PR curve, with values closer to 1.0 indicating better model performance. The denoised signal exhibited higher precision and recall than both the attenuated signal and the signal corrected with a Gaussian filter. In particular, at a recall of 0.5, the precision of the attenuated signal was 0.47, whereas the precision of the denoised signal improved to 0.98. Furthermore, the mAP of the denoised signal was 0.80, which was superior to 0.49 mAP of the attenuated signal and the 0.73 mAP of the signal corrected with the Gaussian filter.

[Example 3: Verification of Sensitivity Using Polystyrene Particles]

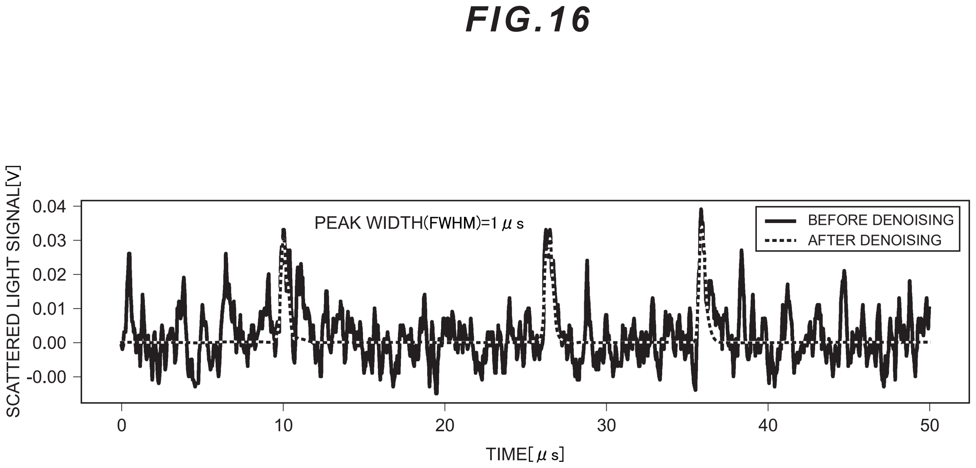

The beam splitter was removed from the optical particle detection apparatus illustrated in Figure 11. A denoising model was trained in the same manner as described above. A solution containing 27 nm standard polystyrene particles, a solution containing 40 nm standard polystyrene particles, a solution containing 60 nm standard polystyrene particles, and particle-free phosphate buffered saline (PBS) were each passed through the flow cell of the optical particle detection apparatus. Figure 16 illustrates the detection signal before denoised by the denoising model and the detection signal after denoised by the denoising model when the solution containing 27 nm polystyrene particles was passed through the flow cell.

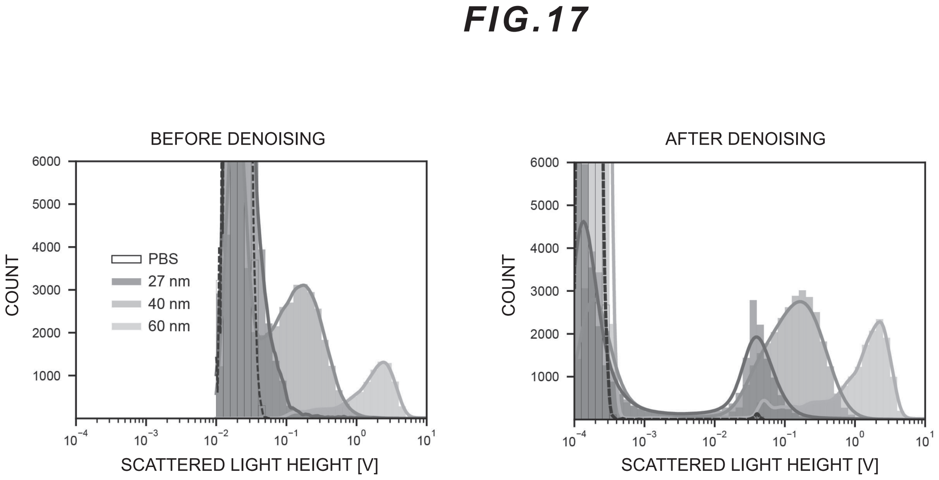

Figure 17 illustrates histograms of the peak heights of scattered light when the solution containing 27 nm polystyrene particles, the solution containing 40 nm polystyrene particles, the solution containing 60 nm polystyrene particles, and the particle-free PBS were each passed through the flow cell. As illustrated on the left side of Figure 17, before denoising, the peaks of scattered light derived from 27 nm particles were indistinguishable from the peaks of scattered light derived from particle-free PBS. However, as illustrated on the right side of Figure 17, denoising significantly reduced the peak height of scattered light derived from particle-free PBS, allowing the peaks of scattered light derived from 27 nm particles to be distinguished from the peaks of scattered light derived from particle-free PBS. Furthermore, it was possible to distinguish between 27 nm particles, 40 nm particles, and 60 nm particles.

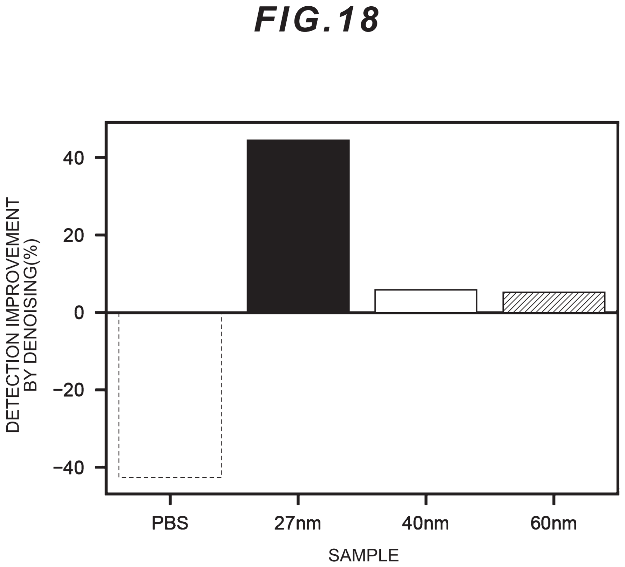

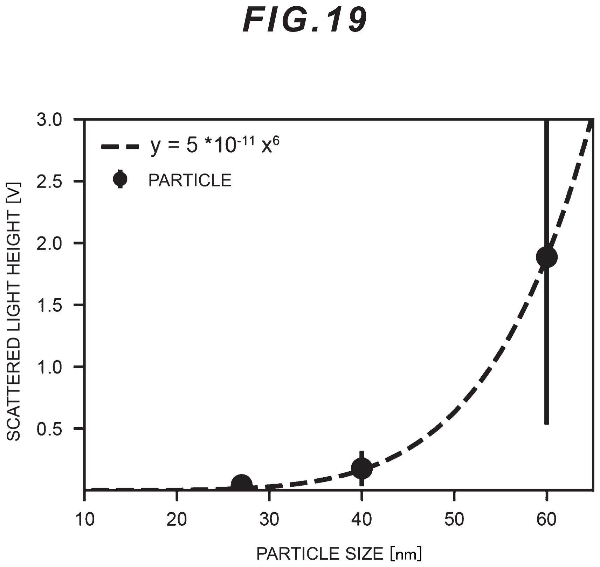

As illustrated in Figure 18, the number of peaks detected when particle-free PBS was passed through the flow cell decreased by approximately 40% as a result of denoising. The number of peaks detected when the solution containing 27 nm polystyrene particles was passed through the flow cell increased by approximately 40% as a result of denoising. Figure 19 illustrates the result of approximating the relationship between particle size and peak height of scattered light after denoising using a sextic function. The result was consistent with the theory of Rayleigh scattering.

Also, when the solution containing 27 nm polystyrene particles was passed through the flow cell, it was possible to detect 96,000 peaks per second.

[Example 4: Verification of Sensitivity Using Biomolecules]

(Preparation of Sample Fluid Containing Extracellular Vesicles Derived from Serum Samples)

Serum samples from healthy donors and colon cancer patients were purchased from BizCom Japan (Tokyo, Japan). The serum samples were centrifuged at 10,000 × g for 10 minutes at 4°C to remove cells and debris from the serum samples. Using a TLS-55 rotor, the supernatant of the serum samples was subjected to ultracentrifugation at 49,500 rpm (210,000 × g) for 35 minutes at 4°C to prepare extracellular vesicles (EVs). The extracellular vesicle pellet was washed with 2 mL of PBS by ultracentrifugation at 49,500 rpm (210,000 × g) for 35 minutes at 4°C using a TLS-55 rotor, and then resuspended in PBS to obtain a sample fluid containing extracellular vesicles derived from the serum sample.

(Staining of Extracellular Vesicles with Antibodies)

The extracellular vesicles derived from serum samples were incubated in the dark at room temperature for two hours with anti-human CD9 antibody (Cosmo Bio, clone: 12A12) labeled with Tide Fluor 5WS (registered trademark). To remove unbound antibodies, the extracellular vesicles were transferred to an ultrafiltration spin column (300 kDa cutoff, APRO Science) and centrifuged at 14,000 g at room temperature. Then, the extracellular vesicles were washed twice with PBS.

(Measurement)

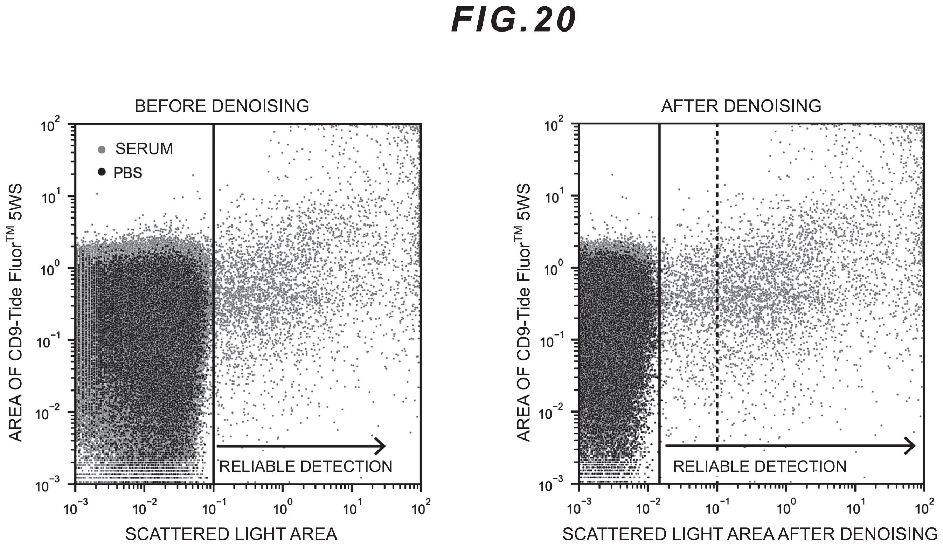

An optical particle detection apparatus having a light source for applying excitation light of 637 nm and excitation light of 488 nm to the flow cell, as illustrated in Figure 1, was prepared. A solution containing fluorescently labeled extracellular vesicles was passed through the flow cell. Since the refractive index of Tide Fluor 5WS (registered trademark) is close to that of water, Tide Fluor 5WS (registered trademark) can emit weak scattered light. The scatter plot on the left side of Figure 20 illustrates the relationship between the peak area of scattered light before denoising and the peak area of fluorescence. The scatter plot on the right side of Figure 20 illustrates the relationship between the peak area of scattered light after denoising using the denoising model and the peak area of fluorescence. In the drawing, 99.9% of the peaks of scattered light derived from PBS are located to the left of the vertical solid line. As such, it can be determined that the signal to the right of the vertical solid line in the drawing is not noise and is derived from extracellular vesicles. By denoising, the vertical solid line in the drawing shifted to the left, enabling the determination of scattered light derived from extracellular vesicles, even when the peak area is small.

[Example 5: Verification of Detection Limit Using Polystyrene Particles]

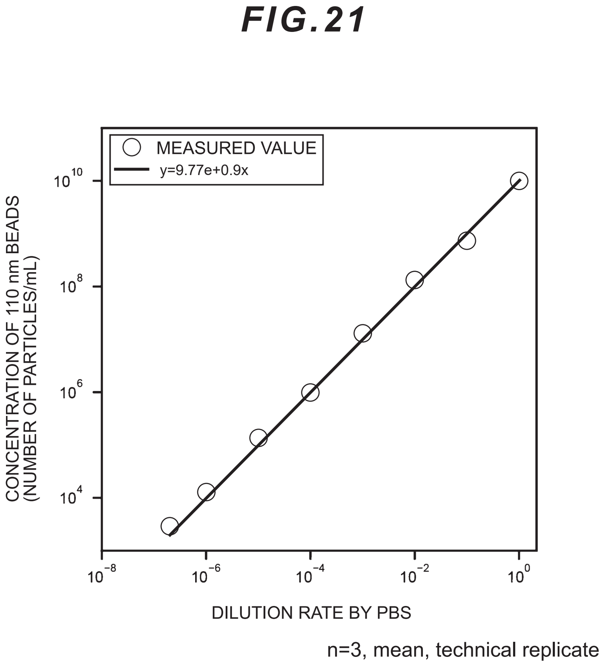

Polystyrene particles of 110 nm were serially diluted with PBS. A solution containing the particles was passed through the flow cell of an optical particle detection apparatus, and a particle concentration (particles/mL) was calculated from a detection signal of scattered light from which noise had been cancelled using a denoising model. Figure 21 illustrates the relationship between the dilution rate and the particle concentration obtained by detection. The relationship between the dilution rate and the particle concentration obtained by detection could be approximated by a linear function, indicating that the detected particle concentration was accurate. From this result, it was calculated that particles with a concentration of at least $2.82 \times 10^3$ particles/mL were detectable.

[Example 6: Verification of Detection Limit Using Biomolecules]

(Preparation of Sample Fluid Containing Extracellular Vesicles Derived from Cultured Cells)

Human ovarian cancer cell line ES-2 and human colon cancer cell line HCT116 were purchased from American Type Culture Collection. Cells expressing ES-2 CD9-sfGFP (ES-2-CD9) were established as follows. CD9-sfGFP in pSBbi-Hyg and pCMV(CAT)T7-SB100 (#34879, Addgene) were transfected into the cells using a Lipofectamine reagent (Thermo Fisher Scientific). The transfected cells were then selected with 500 μg/mL hygromycin B (Thermo Fisher Scientific). Subsequently, cell populations with high sfGFP expression were sorted by MoFlo XDP (Beckman Coulter).

The established cell line was cultured in McCoy's 5A medium supplemented with 10% heat-inactivated fetal bovine serum and 500 ug/mL hygromycin B at 37°C under 5% $CO_2$. HCT116 cells were cultured at 37°C under 5% $CO_2$ in Dulbecco's Modified Eagle Medium supplemented with 10% heat-inactivated FBS and antibiotic-antifungal solution (Thermo Fisher Scientific).

To prepare cell culture conditioned medium, cells were grown on culture dishes until 70% to 80% confluent. Then, the cells were washed with PBS, and the medium was replaced with Advanced DMEM (registered trademark, Thermo Fisher Scientific) containing antibiotic-antifungal and 2 mmol/L L-glutamine (Thermo Fisher Scientific). After 48 hours of incubation, the medium was collected as a cell culture conditioned medium, and the cell culture conditioned medium was centrifuged at 4°C and 2000 × g for 10 minutes to obtain the supernatant.

To remove cell debris, the supernatant was filtered through a 0.22 μm filter (Millipore). The filtered supernatant was ultracentrifuged at 35,000 rpm (210,000 × g) using an SW41Ti rotor for 70 minutes at 4°C to prepare extracellular vesicles (EVs). The extracellular vesicle pellet was washed with 11 mL of PBS by ultracentrifugation at 35,000 rpm (210,000 × g) for 70 minutes at 4°C using the SW41Ti rotor, and resuspended in PBS to obtain a sample fluid containing extracellular vesicles derived from cultured cells.

(Staining of Extracellular Vesicles with Antibodies)

The extracellular vesicles derived from cultured cells were incubated in the dark at room temperature for two hours with anti-human CD9 antibody (Cosmo Bio, clone:12A12) labeled with Tide Fluor 5WS (registered trademark). To remove unbound antibodies, the extracellular vesicles were transferred to an ultrafiltration spin column (300 kDa cutoff, APRO Science) and centrifuged at 14,000 g at room temperature. Then, the extracellular vesicles were washed twice with PBS.

(Measurement)

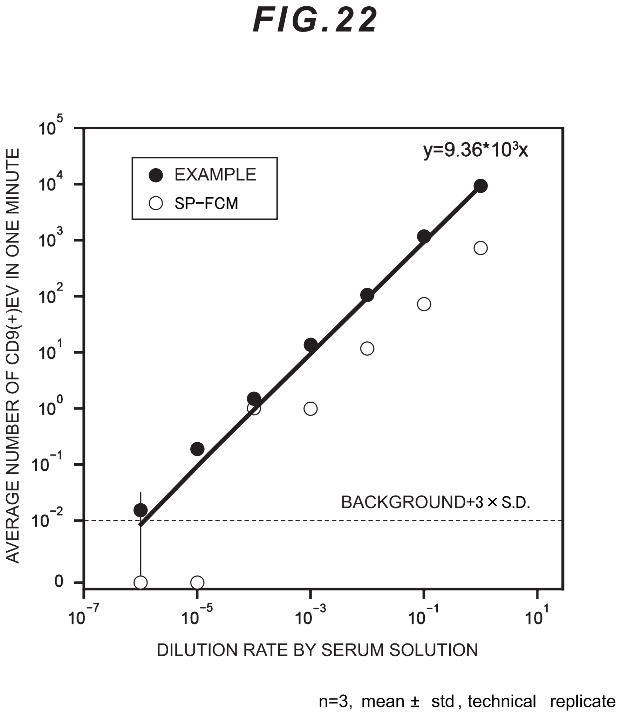

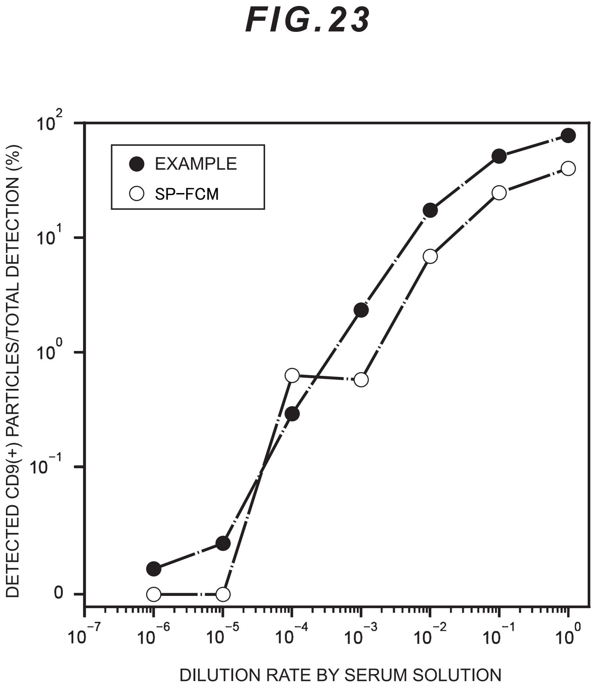

Fluorescently labeled extracellular vesicles were serially diluted in serum. A solution containing fluorescently labeled extracellular vesicles was passed through the flow cell of an optical particle detection apparatus, and the noise of the signal derived from scattered light was cancelled using a denoising model. When fluorescence and scattered light were detected simultaneously, it was determined that fluorescently labeled extracellular vesicles were detected, and when only scattered light was detected, it was determined that particles other than fluorescently labeled extracellular vesicles were detected. Figure 22 illustrates the relationship between the dilution rate and the average number of detected extracellular vesicles. The relationship between the dilution rate and the average number of detected extracellular vesicles could be approximated by a linear function, indicating that the average number of detected extracellular vesicles was accurate. From this result, it was calculated that extracellular vesicles were detectable in a sample with a dilution rate of $10^{-6}$, and that at least $1.1 \times 10^4$ extracellular vesicles per mL were detectable. Figure 23 illustrates the relationship between the dilution rate and the extracellular vesicles in all detected particles. From this result, it was calculated that 0.04% of extracellular vesicles relative to the total particle number were detectable.

The same samples were measured using a single-photon counting flow cytometer (SP-FCM). As illustrated in Figures 22 and 23, the SP-FCM failed to detect extracellular vesicles in the sample with a dilution rate of $10^{-4}$. With the SP-FCM, extracellular vesicles at a concentration of $3.87 \times 10^5$ vesicles/mL or less could not be detected, and extracellular vesicles of 6.98% or less relative to total particle number could not be detected.

[Example 7: Detection of Extracellular Vesicles in Unpurified Serum]

Anti-human CD9 antibody (Cosmo Bio, clone: 12A12) labeled with Tide Fluor 5WS (registered trademark) and anti-human CD147 antibody (Abcam, clone: MEM-M6/1) labeled with Alexa 488 were prepared. To each of unpurified sera derived from two healthy individuals, the anti-CD9 antibody and the anti-CD147 antibody were added, and the sera were diluted 50-fold with PBS to obtain sample fluids. As controls, PBS, PBS with the anti-CD9 antibody added, and PBS with the anti-CD147 antibody added were prepared. PBS was used as a control for background noise. PBS with antibody added was used as a control for background noise and false detection due to antibody aggregation. Each of the sample fluids was passed through the flow cell of an optical particle detection apparatus for 2 minutes, and the noise of the signal derived from scattered light was cancelled using a denoising model.

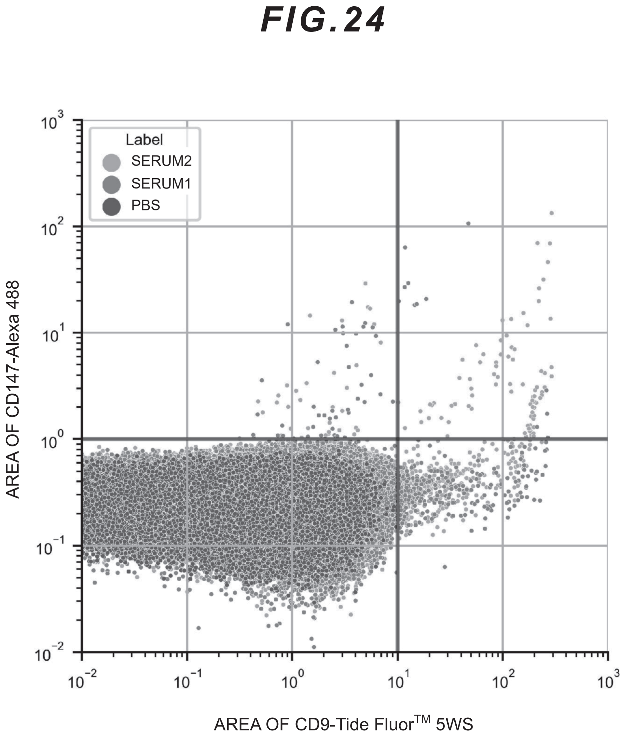

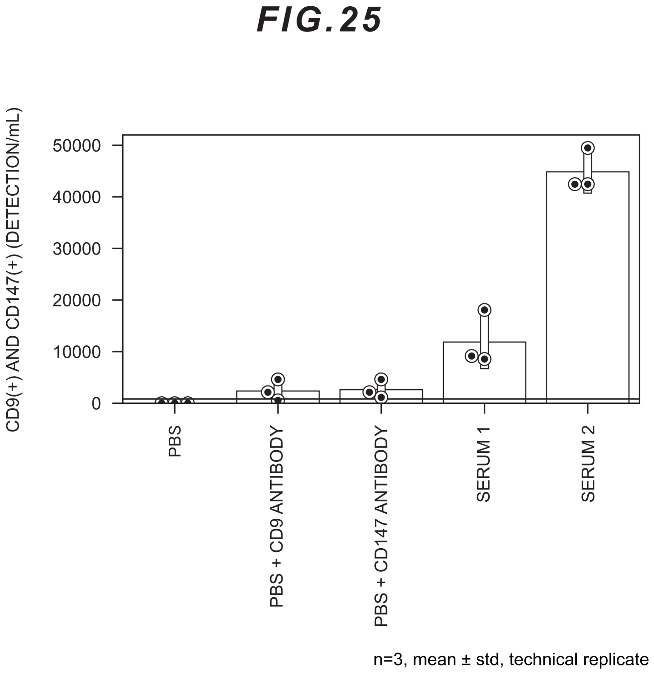

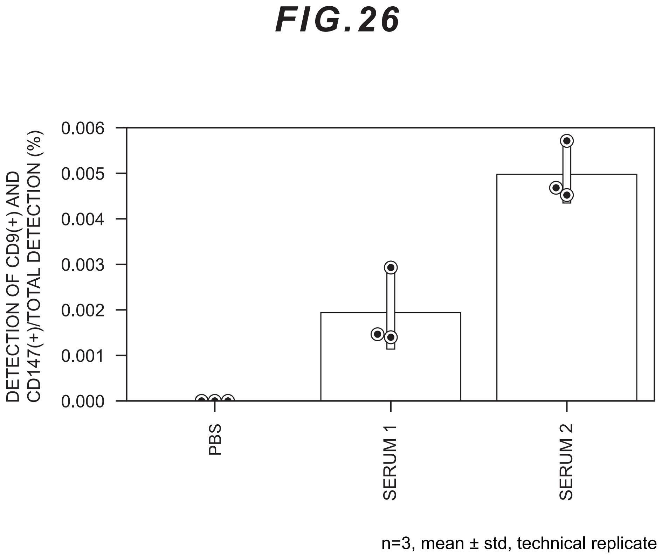

To exclude 99.9% of detection peaks derived from PBS, the detection threshold was set at SN ratio = 18. The results illustrated in Figures 24, 25, and 26 indicated that for serum from one donor, 0.05% of the total detected peaks (1,214,392) were peaks derived from CD9-positive extracellular vesicles. This indicated that $2.7 \times 10^5$ CD9-positive extracellular vesicles per mL were detected. Furthermore, it was indicated that 0.01% of the total detected peaks were peaks derived from CD147-positive extracellular vesicles. This indicated that $7.2 \times 10^4$ CD147-positive extracellular vesicles were detected per mL. Furthermore, it was indicated that 0.002% of the total detected peaks were peaks derived from extracellular vesicles positive for both CD9 and CD147. This indicated that $1.2 \times 10^4$ CD147-positive extracellular vesicles were detected per mL.

[Example 8: Detection of Extracellular Vesicles in Serum Derived from Colon Cancer Patients]

(Preparation of Sample Fluid Containing Extracellular Vesicles Derived from Serum Samples)

Serum was obtained from five colon cancer patients and five healthy individuals. The serum was centrifuged at $10,000 \times g$ for 10 minutes at 4°C to remove cells and debris from the serum. Using a TLS-55 rotor, the supernatant of the serum was ultracentrifuged at 49,500 rpm ($210,000 \times g$) for 35 minutes at 4°C to purify extracellular vesicles (EVs). The extracellular vesicle pellet was washed with 2 mL of PBS by ultracentrifugation at 49,500 rpm ($210,000 \times g$) for 35 minutes at 4°C using the TLS-55 rotor, and resuspended in PBS to obtain a sample fluid containing extracellular vesicles.

(Staining of Extracellular Vesicles with Antibodies)

Then, the extracellular vesicles were incubated in the dark at room temperature for 2 hours together with anti-human CD9 antibody (Cosmo Bio, clone: 12A12) labeled with Tide Fluor 5WS (registered trademark) and anti-human CD147 antibody (Abcam, clone: MEM-M6/1) labeled with Alexa 488. To remove unbound antibodies, the extracellular vesicles were transferred to an ultrafiltration spin column (300 kDa cutoff, APRO Science) and centrifuged at 14,000 g at room temperature. Then, the extracellular vesicles were washed twice with PBS.

(Measurement)

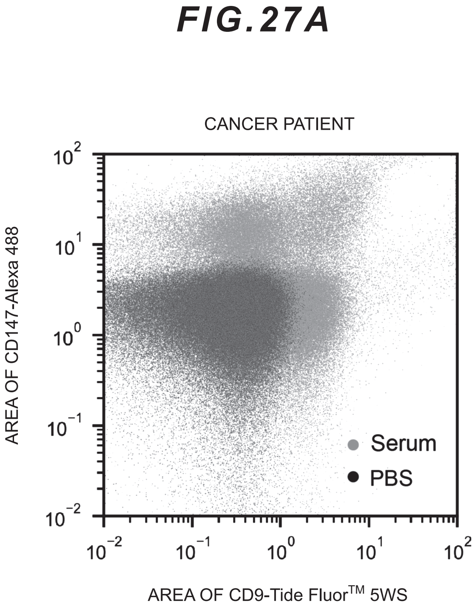

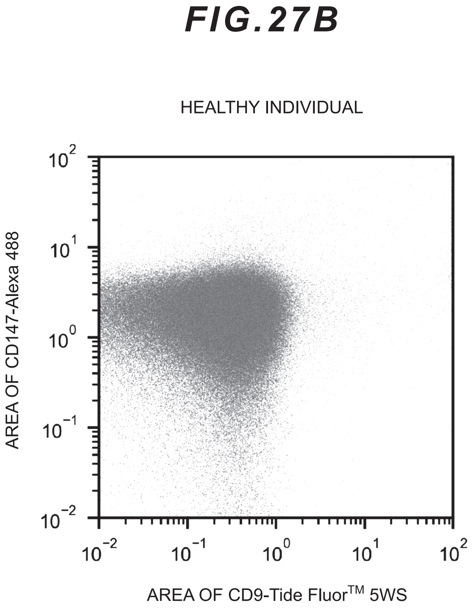

Each of the fluorescently labeled sample fluids was passed through the flow cell of an optical particle detection apparatus for 2 minutes, and noise of detection signals derived from scattered light was cancelled using a denoising model. As illustrated in Figure 27A, the extracellular vesicles derived from colon cancer patients exhibited positivity for both CD9 and CD147. In contrast, as illustrated in Figure 27B, the extracellular vesicles derived from healthy individuals did not exhibit positivity for both CD9 and CD147. Since it has been reported that the amount of exosomes that are positive for both CD9 and CD147 in the blood of colon cancer patients is significantly greater than in healthy individuals, the positivity for both CD9 and CD147 can be used as a marker for colon cancer.

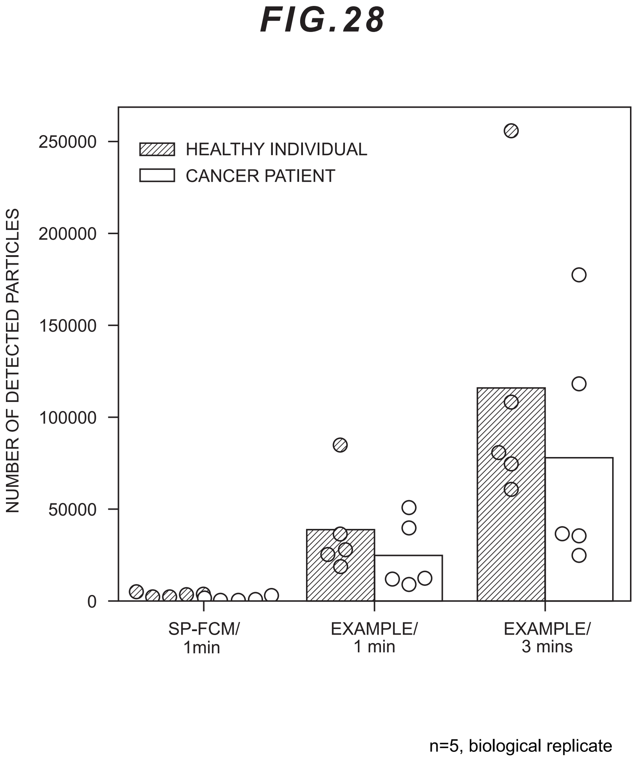

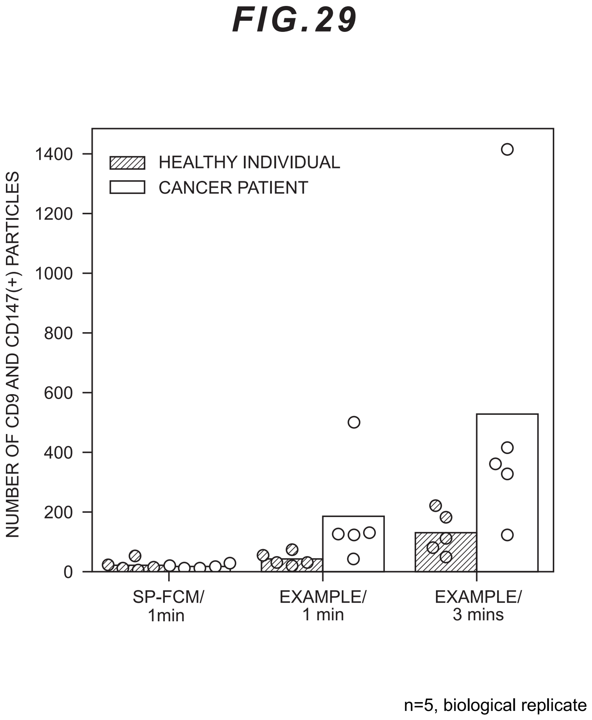

The same samples were passed through the SP-FCM for 1 minute, through the optical particle detection apparatus according to the example for 1 minute, and through the optical particle detection apparatus according to the example for 3 minutes. As illustrated in Figure 28, the average of the total number of particles detected by the SP-FCM was 2,224, and the average of the total number of particles detected by the optical particle detection apparatus according to the example was 31,610 when the sample was passed through for 1 minute, and 97,175 when the sample was passed through for 3 minutes. As illustrated in Figure 29, the number of particles positive for both CD9 and CD147 detected by SP-FCM was 19, and the number of particles positive for both CD9 and CD147 detected by the optical particle detection apparatus according to the example was 112 when the sample was passed for 1 minute, and 328 when the sample was passed for 3 minutes.

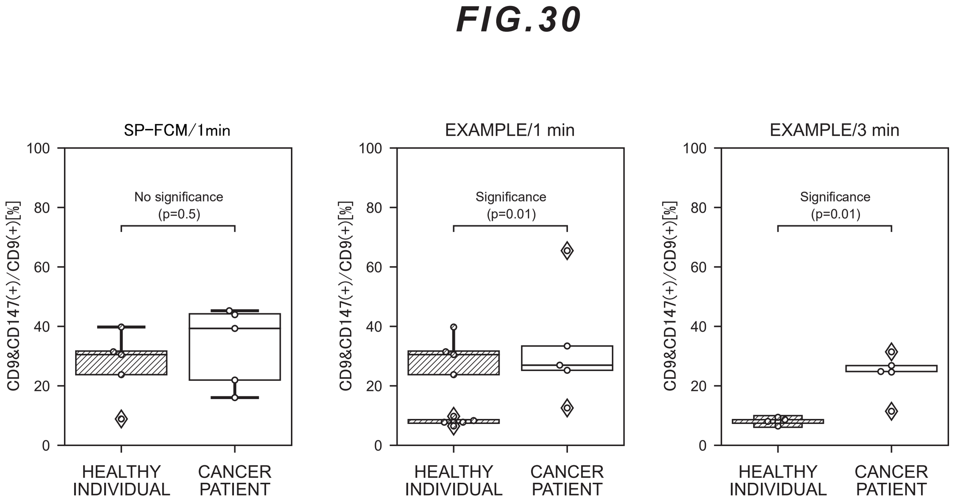

As illustrated in Figure 30, the proportion of particles that are positive for both CD9 and CD147 to CD9-positive particles in the detection results of SP-FCM did not indicate a significant difference between the colon cancer patients and healthy individuals. However, in the detection results of the optical particle detection apparatus according to the example, the proportion of the number of particles positive for both CD9 and CD147 to the number of CD9-positive was 0.93% in the colon cancer patients and 0.17% in the healthy individuals, and a significant difference ($p < 0.05$) was observed between the colon cancer patients and healthy individuals. These results indicated that the denoising according to this example is suitable for the detection of minute marker substances. Furthermore, the results indicated that the method is applicable to the diagnosis of diseases because it can detect minute marker substances.

[Example 9: Training of Denoising Model]

Ultrapure water containing no particles was passed through the flow cell of an optical particle detection apparatus, and a time-series signal of the detected scattered light was obtained as a noise signal. As illustrated in Figure 6, the noise signal was input to a denoising model, and the denoising model learned the waveform of the noise signal. Then, a nanoparticle-containing fluid was passed through the flow cell of the optical particle detection apparatus, and a time-series signal of the detected scattered light was obtained as a signal for learning. The signal for learning was input to the denoising model, and the denoising model learned, from the waveform of the signal for learning, the waveform of a signal containing particles. In the following examples, a denoising model trained using this method was used.

[Example 10: Verification of Denoising Capability]

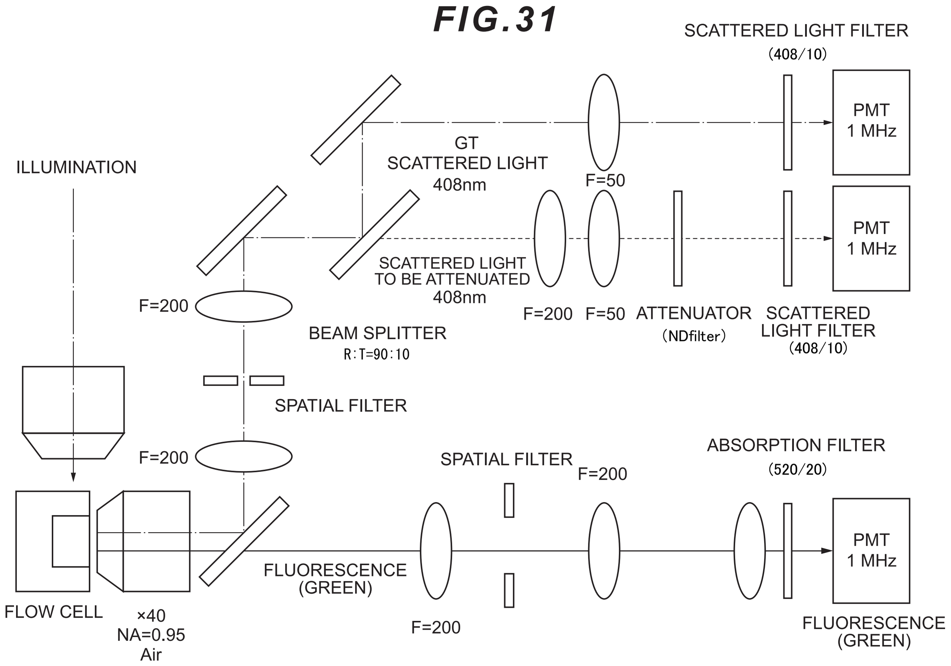

An optical particle detection apparatus as illustrated in Figure 31 was prepared. In the optical particle detection apparatus illustrated in Figure 31, scattered light generated by a nanoparticle-containing fluid flowing through the flow cell is split into two by a beam splitter. At the beam splitter, 90% of the scattered light is reflected, and 10% of the scattered light is transmitted. The scattered light transmitted through the beam splitter is further attenuated by an attenuator including an ND filter, resulting in a reduced SN ratio, and is then detected by a first detector. The electrical signal generated by the first detector is used as an attenuated (At) signal. The signal with a high SN ratio reflected by the beam splitter is detected by a second detector. The electrical signal generated by the second detector is used as a ground truth (GT) signal.

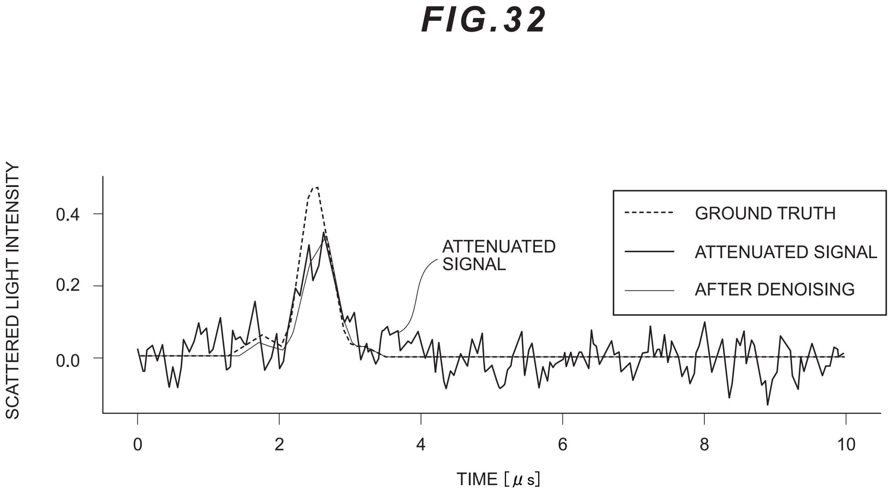

First, ultrapure water containing no nanoparticles was passed through the flow cell, and a noise signal generated by the first detector was used to train the denoising model. Next, a solution containing 110 nm polystyrene particles was passed through the flow cell, and an attenuated signal generated by the first detector and a ground truth signal generated by the second detector were obtained simultaneously. The trained denoising model was then used to generate a denoised signal by cancelling the noise from the attenuated signal. As illustrated in Figure 32, the denoised signal was similar to the ground truth signal. Although the denoising model was not trained on the ground truth signal, and trained only on the noise signal, it was demonstrated that noise was accurately cancelled from the attenuated signal.

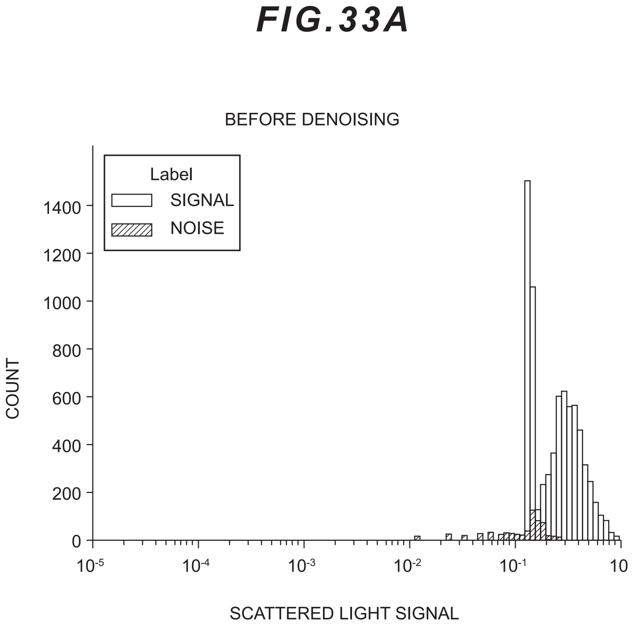

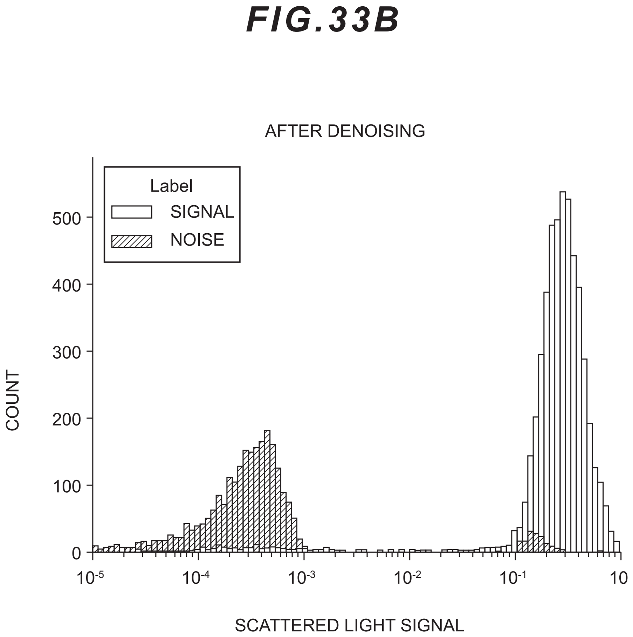

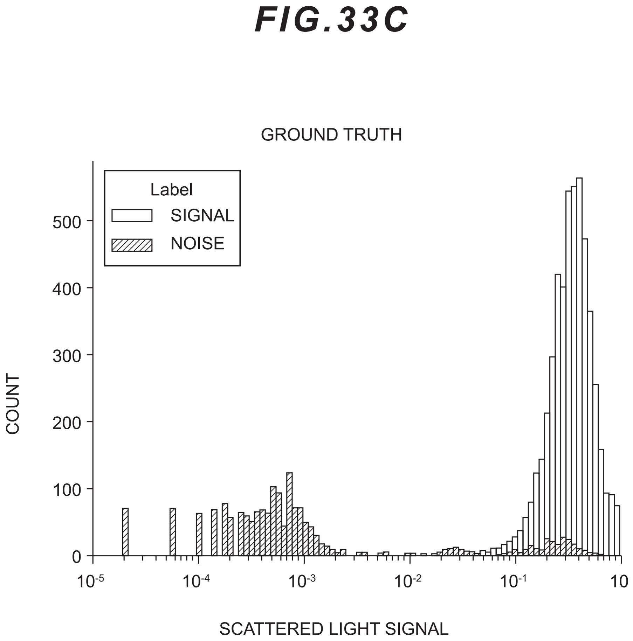

As illustrated in Figure 33A, in the histogram indicating the relationship between the peak height of the attenuated signal and the number of peaks, the peaks due to noise and the peaks representing the scattered light from particles overlapped with each other. In contrast, the histogram of the denoised signal resembled the histogram of the ground truth signal, and the peaks due to noise and the peaks representing scattered light from particles were clearly distinguishable. The height of the peaks due to noise in the denoised signal was reduced to 1/100 of the height of the peaks due to noise in the attenuated signal.

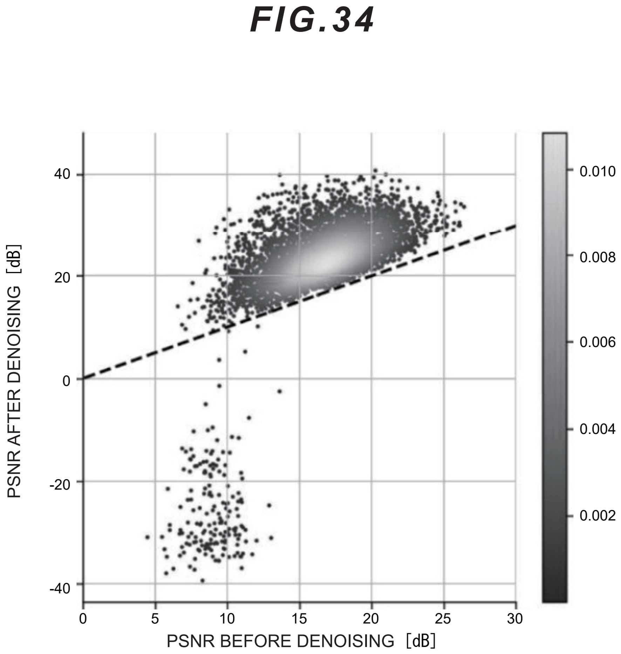

Next, the correlation between the peak signal-to-noise ratio (PSNR) of the attenuated signal and the PSNR of the denoised signal was calculated. As illustrated in Figure 34, data points were plotted with the PSNR of the attenuated signal on the horizontal axis and the PSNR of the denoised signal on the vertical axis. The points above the broken line in the drawing represent improved PSNR, indicating improved accuracy in particle detection.

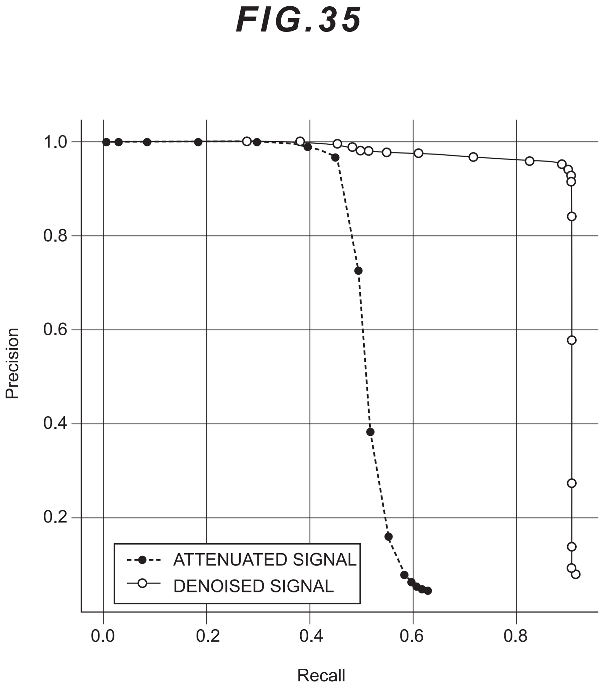

Next, the precision-recall curves (PR curves) illustrated in Figure 35 were calculated. Precision indicates the proportion of detected peaks that are signals, and recall indicates the proportion of detected signals. A higher peak detection threshold increases precision but decreases recall. A lower peak detection threshold increases recall but decreases precision. As such, there is a trade-off between precision and recall, and when noise and signals representing scattered light from particles can be sufficiently separated, high precision and high recall can be achieved simultaneously. The denoising model according to the example effectively improved the recall in particular. This indicates that the number of signals that were removed as they were below the threshold was reduced.

[Example 11: Verification of Sensitivity Using Polystyrene Particles]

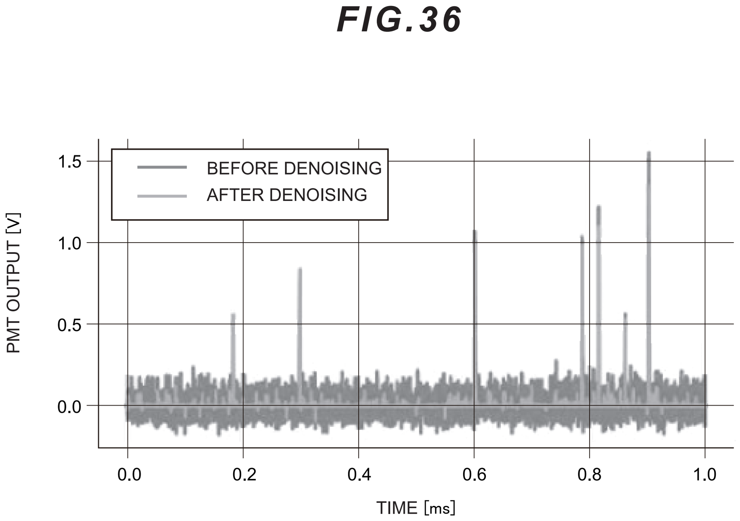

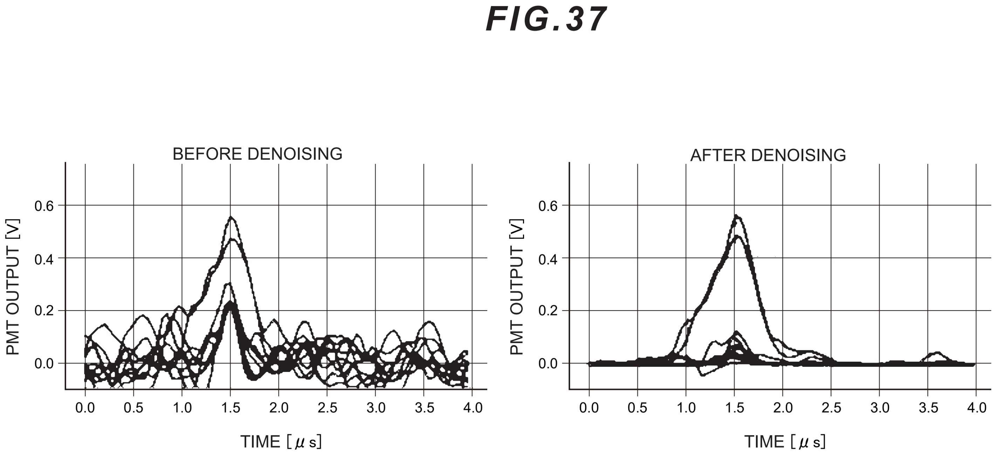

The beam splitter and the attenuator were removed from the optical particle detection apparatus illustrated in Figure 31. Pure water was passed through the flow cell of the optical particle detection apparatus, and the noise signal was obtained to train a denoising model. Next, a solution containing 27 nm standard polystyrene particles, a solution containing 30 nm standard polystyrene particles, a solution containing 40 nm standard polystyrene particles, a solution containing 60 nm standard polystyrene particles, and a solution containing 110 nm standard polystyrene particles were passed through the flow cell of the optical particle detection apparatus, and noise was cancelled as illustrated in Figures 36 and 37. The interval between peaks in the scattered light was 1 us, and, theoretically, it was possible to detect 1,000,000 events per second. Experimentally, it was possible to detect 96,0000 events.

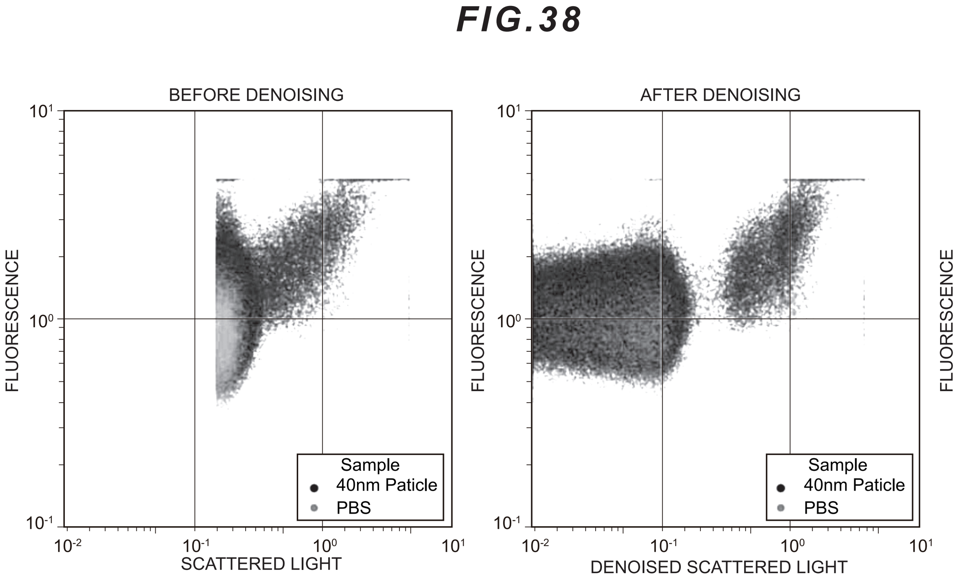

The polystyrene particles fluoresce. The left side of Figure 38 illustrates the relationship between the peak area of scattered light before denoising and the peak area of fluorescence when a solution containing 40 nm standard polystyrene particles was passed through the flow cell, and the right side of Figure 38 illustrates the relationship between the peak area of scattered light after denoising and the peak area of fluorescence. It was demonstrated that denoising clearly separated noise from particle-derived signals.

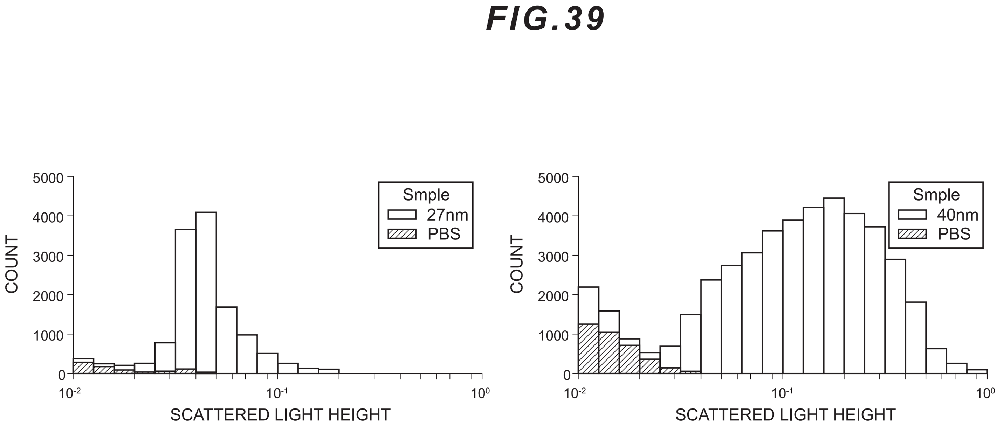

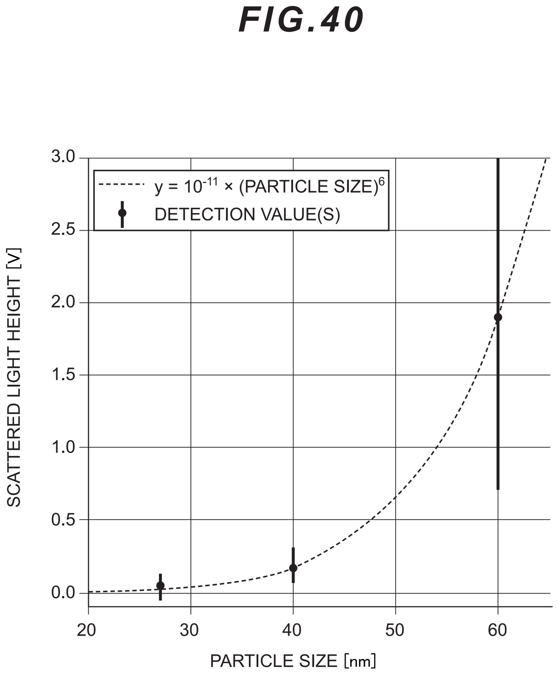

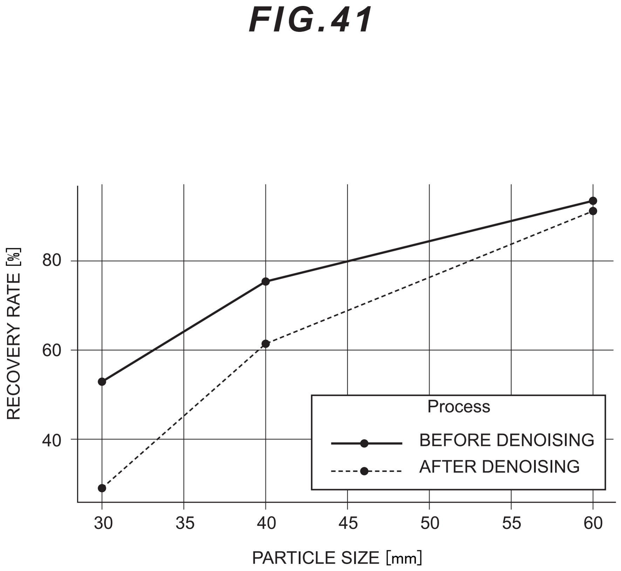

The left side of Figure 39 illustrates a histogram of the peak heights of scattered light when a solution containing 27 nm standard polystyrene particles was passed through the flow cell and noise was cancelled, and the right side of Figure 39 illustrates a histogram of the peak heights of scattered light when a solution containing 40 nm standard polystyrene particles was passed through the flow cell and noise was cancelled. Figure 40 illustrates the result of approximating the relationship between the particle size and peak height of scattered light after denoising using a sextic function. The result was consistent with the theory of Rayleigh scattering. Figure 41 illustrates the relationship between the particle size and recovery rate, which indicates the number of particles detected relative to the number of particles passed through the flow cell. For 30 nm particles, the recovery rate before denoising was approximately 20%, but denoising increased the recovery rate to 55%.

[Example 12: Verification of Detection Limit Using Biomolecules]

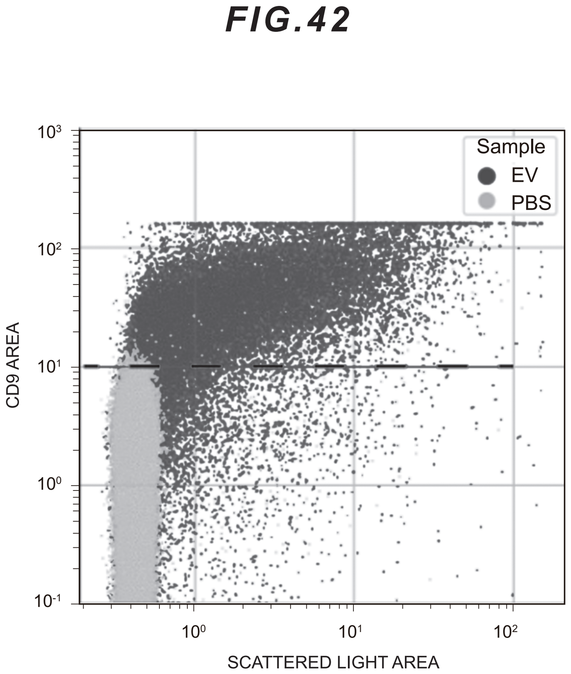

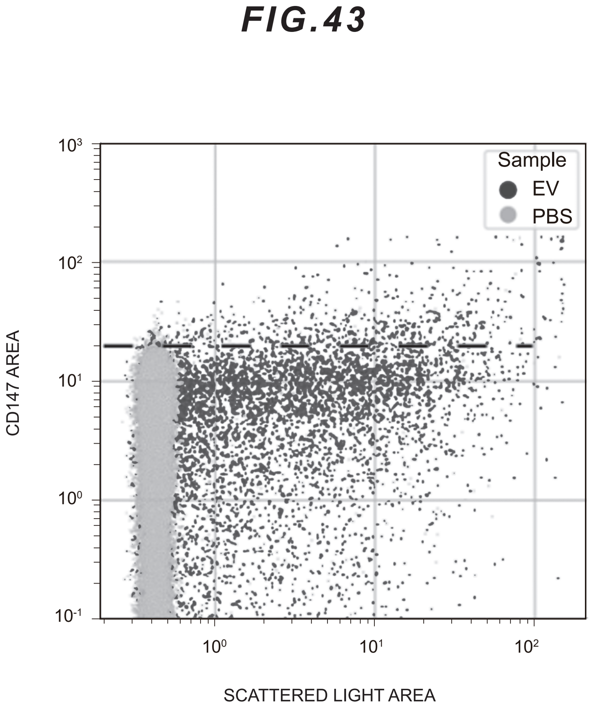

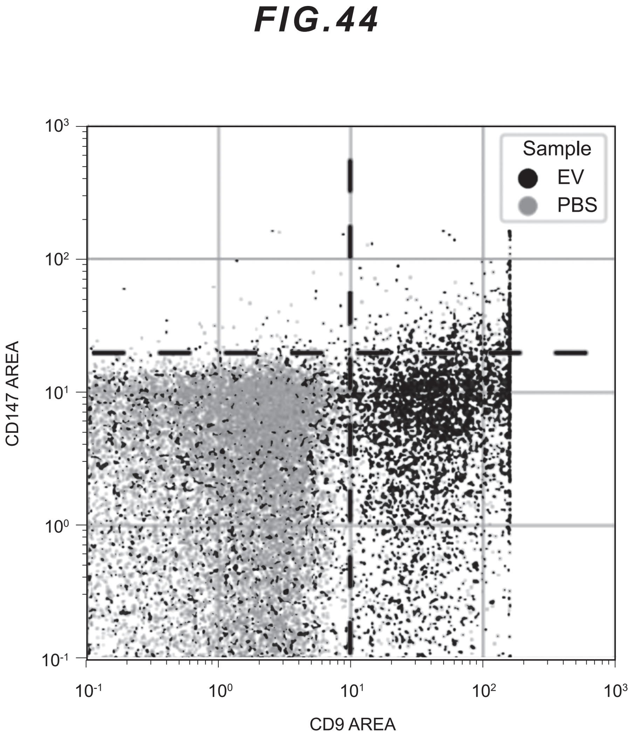

Extracellular vesicles derived from the culture supernatant of human undifferentiated thyroid cancer cells (HTC) were reacted with anti-human CD9 antibody labeled with Tide Fluor 5WS (registered trademark) and anti-human CD147 antibody labeled with Alexa 488. A solution containing fluorescently labeled extracellular vesicles was passed through the flow cell of an optical particle detection apparatus. Figure 42 is a scatter plot illustrating the relationship between the peak area of scattered light after denoising using a denoising model and the peak area of CD9-derived fluorescence. The dashed line indicates the threshold for determining positivity. Figure 43 is a scatter plot illustrating the relationship between the peak area of scattered light after denoising using the denoising model and the peak area of CD147-derived fluorescence. The dashed line indicates the threshold for determining positivity. Figure 44 is a scatter plot illustrating the relationship between the peak area of CD9-derived fluorescence and the peak area of CD147-derived fluorescence. The dashed line indicates the threshold for determining positivity. Of the detected extracellular vesicles, 85% were CD9 positive, and 10% were both CD9 and CD147 positive.

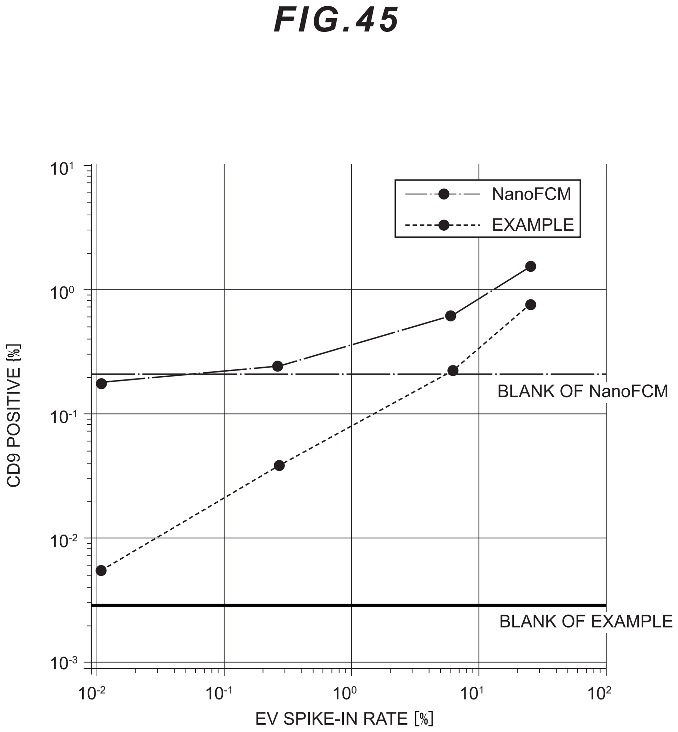

To verify whether extracellular vesicles at low concentrations can be detected, fluorescently labeled extracellular vesicles were added to serum samples at various concentrations, and the serum samples were passed through the flow cell of the optical particle detection apparatus. As illustrated in Figure 45, the concentration of extracellular vesicles and the CD9 positivity rate had a linear relationship. When the concentration of added extracellular vesicles was 0.011%, the CD9 positivity rate was 0.002% ± 0.0003 with a confidence interval of 99.9937%. The result indicated that the detection limit (LoD) of concentration by the system of the example was 0.005%. As a control, the same sample was detected by NanoFCM. At concentrations below 10%, the linear relationship between the extracellular vesicle concentration and the CD9 positivity rate was not maintained, and it was not possible to distinguish between blanks and samples containing extracellular vesicles.

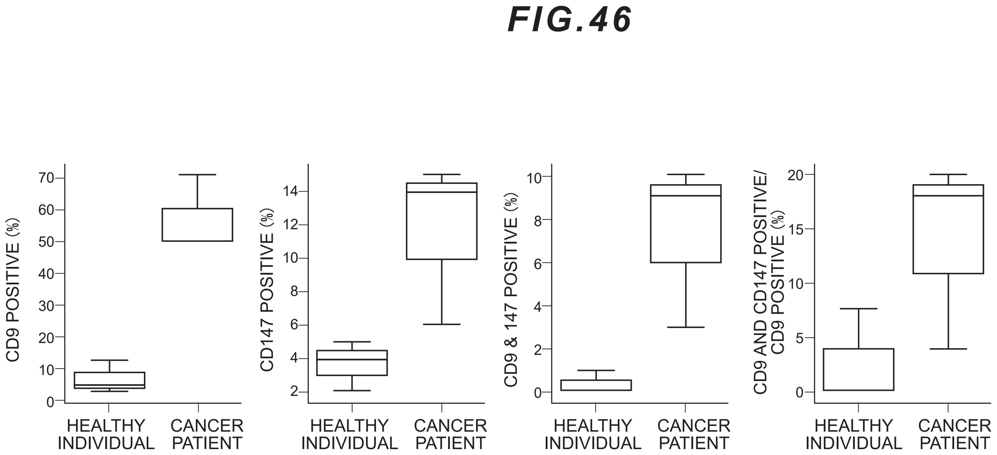

Next, sera were obtained from three cancer patients and three healthy individuals, and each serum was passed through the flow cell of an optical particle detection apparatus according to the example. As illustrated in Figure 46, the proportion of positivity for both CD9 and CD147 was 7.33 ± 3.79% in the cancer patients, whereas the proportion of positivity for both CD9 and CD147 was 0.44 ± 0.58% in the healthy individuals. The results demonstrated that the denoising according to the example is suitable for detecting minute particles such as extracellular vesicles. Furthermore, the results indicated that the method is applicable to the diagnosis of diseases because it can detect minute substances such as extracellular vesicles.

[Example 13: Filter Design]

Particles were passed through the flow cell of an optical particle detection apparatus, and a ground truth (GT) signal was obtained in the same manner as in Example 10. Also, an attenuated signal was obtained as a signal for designing. Furthermore, the signal for designing was processed with a trained denoising model to obtain a denoised signal for designing. Each of the signal for designing and the denoised signal for designing was treated as one-dimensional data with an interval of 0.5 milliseconds, and the kernel weight was set such that the difference between the signal output by onedimensionally convolving the signal for designing with a kernel of size $1 \times 1,000$ and the denoised signal for designing was small. The kernel with the set weight was obtained as the designed time filter.

In addition to the time filter, a Gaussian filter, a Kalman smoother, a Kalman filter, and a frequency filter were also prepared. The Kalman smoother, the Kalman filter, and the frequency filter were designed based on the signal for designing and the denoised signal for designing. The frequency filter was designed by calculating the frequency transfer function given by the following Expression (7). The output of the frequency filter is given by the following Expression (8).

$$F(w) = F(After\ denoising)/F(before\ denoising) \qquad (7)$$

$$y(t)\ Fourier\ Transform\ (F(w)\ *\ x(w)) \qquad (8)$$

Here, x(w) represents the frequency domain of the input signal.

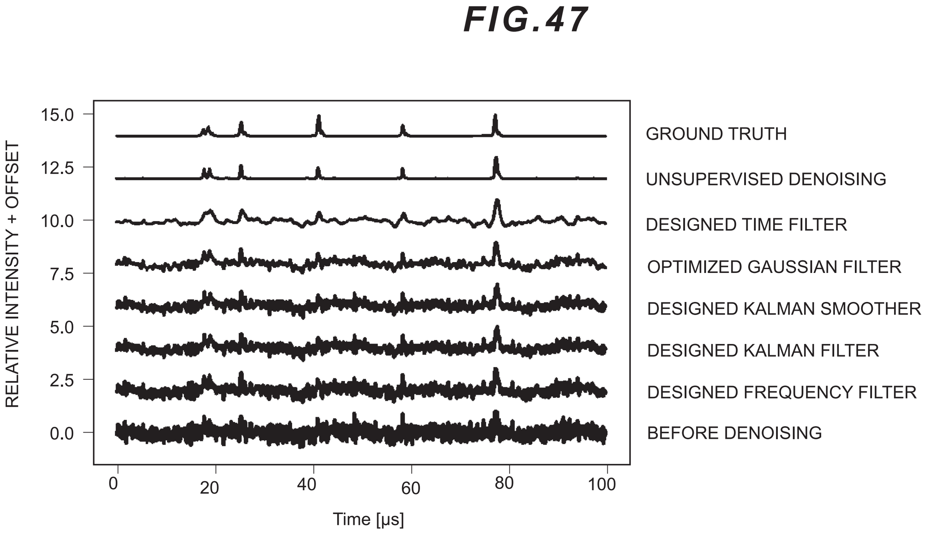

Figure 47 illustrates the results of denoising the attenuated signal with each of a denoising model trained in an unsupervised manner, the designed time filter, the optimized Gaussian filter, the designed Kalman smoother, the designed Kalman filter, and the designed frequency filter. As illustrated in Figure 47, the signal denoised by the designed time filter approximated the signal denoised by the denoising model trained in an unsupervised manner.

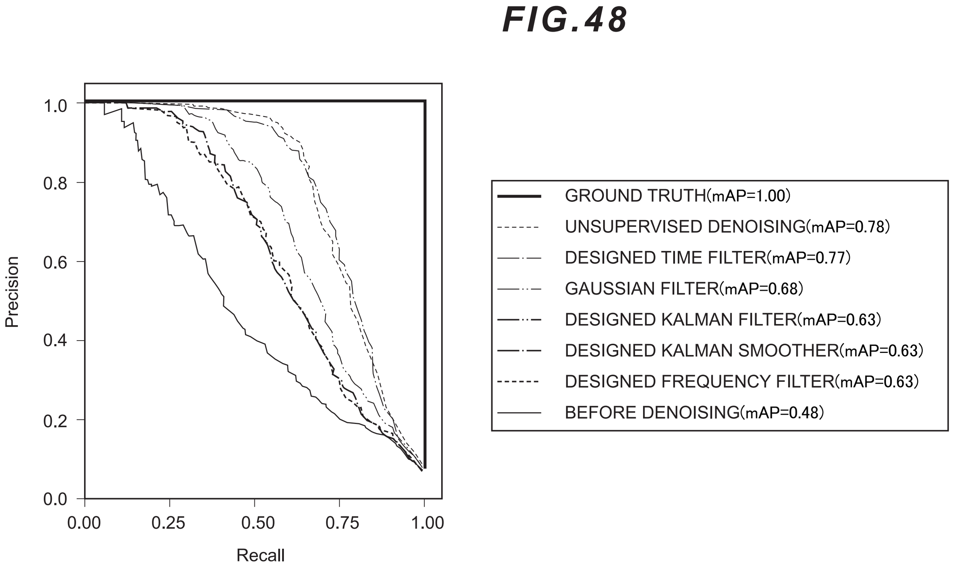

As illustrated in Figure 48, PR curves were calculated for signals denoised separately with the unsupervisedly trained denoising model, the designed time filter, the optimized Gaussian filter, the designed Kalman smoother, the designed Kalman filter, and the designed frequency filter. The mAP of the ground truth (GT) signal was 1.0, the mAP of the signal denoised with the unsupervisedly trained denoising model was 0.78, the mAP of the signal denoised with the designed time filter was 0.77, the mAP of the signal denoised with the Gaussian filter was 0.68, the mAP of the signal denoised with the designed Kalman smoother was 0.63, the mAP of the signal denoised with the designed Kalman filter was 0.63, the mAP of the signal denoised with the designed frequency filter was 0.63, and the mAP of the signal before denoising was 0.48. The time required for kernel convolution calculations tends to be shorter than the time required for calculations using models such as VAE. This example demonstrated that kernel convolution, which involves a short calculation time, can achieve denoising comparable to that achieved by a model, and that measurement targets can be sorted at high speed in real time.

This application claims the benefit of US Provisional Patent Application Serial No. 63/499,732, entitled "OPTOFLUIDIC HIGH-THROUGHPUT AND HIGH SENSITIVITY NANOPARTICLE ANALYZER FOR LARGE-SCALE EV ANALYSIS," filed May 3, 2023, and US Provisional Patent Application Serial No. 63/605,033, entitled "REALIZATION OF NOISE REDUCTION IN REAL TIME," filed December 1, 2023, each of which is incorporated by reference herein in its entirety for all purposes. Furthermore, the entirety of Japanese Patent No. 7369385 is incorporated herein by reference.

Reference Signs List

| | |
|---|---|
| 11 | Detector |
| 12 | Detector |
| 13 | Detector |
| 14 | Input device |
| 15 | Output device |
| 20 | Flow cell |
| 31 | Light source |
| 32 | Light source |
| 33 | Light source |
| 41 | Cylindrical lens |
| 43 | Objective lens |
| 51 | Objective lens |
| 52 | Half mirror |
| 53 | Lens |

| 54 | Spatial filter |
| --- | --- |
| 55 | Lens |
| 56 | Mirror |
| 57 | Wavelength filter |
| 61 | Half mirror |
| 62 | Lens |
| 63 | Spatial filter |
| 64 | Lens |
| 65 | Half mirror |
| 66 | Wavelength filter |
| 67 | Mirror |
| 68 | Wavelength filter |
| 70 | Sorter |
| 100 | Detection apparatus |
| 300 | Computer |
| 301 | Noise signal obtainer |
| 302 | Learning signal obtainer |
| 303 | Noise generation model |
| 304 | Denoising model |
| 305 | Trainer |
| 306 | Detection signal obtainer |
| 307 | Denoised signal obtainer |
| 308 | Determiner |
| 309 | Designing signal obtainer |
| 310 | Parameter setter |
| 311 | Filter |
| 351 | Processor |
| 352 | Storage device |
| 353 | Network interface |

354    Input device

355    Output device

**Claims**

1.  A detection method comprising:

    obtaining a signal from a detection target as a detection signal; and
    inputting the detection signal into a denoising model trained using a noise signal in absence of the detection target to obtain at least one denoised signal that has undergone denoising.

2.  The detection method according to claim 1, wherein the at least one denoised signal is a plurality of denoised signals, and the detection method further comprises obtaining a median value of the plurality of denoised signals as the denoised signal.

3.  The detection method according to claim 1, wherein the denoising model is trained using the noise signal and a signal for learning that is a signal from a learning target.

4.  The detection method according to claim 3, wherein
    the training comprises:

    inputting the signal for learning into the denoising model to obtain a denoised signal for learning;
    obtaining a differential signal that is a difference between the signal for learning and the denoised signal for learning; and
    evaluating the differential signal using the noise signal and feeding back a result of the evaluation to the denoising model.

5.  The detection method according to claim 1, wherein the denoising model is an unsupervised machine learning model.

6.  The detection method according to claim 1, wherein the denoising model includes a neural network.

7.  The detection method according to claim 1, wherein a noise generation model is trained using the noise signal, and a noise estimation signal estimated by the noise generation model is used as the noise signal for training the denoising model.

8.  A detection system comprising:

    a detection signal obtainer configured to obtain a signal from a detection target as a detection signal; and
    a denoised signal obtainer configured to input the detection signal into a denoising model trained using a noise signal in absence of the detection target to obtain at least one denoised signal that has undergone denoising.

9.  The detection system according to claim 8, wherein the at least one denoised signal is a plurality of denoised signals, and the denoised signal obtainer is configured to obtain a median value of the plurality of denoised signals as the denoised signal.

10. The detection system according to claim 8, wherein the denoising model is trained using the noise signal and a signal for learning that is a signal from a learning target.

11. The detection system according to claim 10, wherein
    the training comprises:

    inputting the signal for learning into the denoising model to obtain a denoised signal for learning;
    obtaining a differential signal that is a difference between the signal for learning and the denoised signal for learning; and
    evaluating the differential signal using the noise signal and feeding back a result of the evaluation to the denoising model.

**12.** The detection system according to claim 8, wherein the denoising model is an unsupervised machine learning model.

**13.** The detection system according to claim 8, wherein the denoising model includes a neural network.

**14.** The detection system according to claim 8, wherein a noise generation model is trained using the noise signal, and a noise estimation signal estimated by the noise generation model is used as the noise signal for training the denoising model.

**15.** A detection method comprising:

obtaining a signal from a detection target as a detection signal; and
inputting the detection signal into a filter that is designed in advance to obtain at least one denoised signal that has undergone denoising.

**16.** The detection method according to claim 15, wherein a parameter of the filter is designed such that a signal output by processing a signal for designing with the filter approximates a denoised signal for designing obtained by inputting the signal for designing into a denoising model.

**17.** The detection method according to claim 16, wherein the parameter of the filter is designed such that a difference between a signal output by processing the signal for designing with the filter and the denoised signal for designing is small.

**18.** The detection method according to claim 15, wherein the filter is a one-dimensional convolutional time filter.

**19.** The detection method according to claim 16, wherein the filter is a kernel, and a weight of the kernel is set such that a signal output by processing the signal for designing with the kernel approximates the denoised signal for designing.

**20.** The detection method according to claim 19, wherein the weight of the kernel is set such that a difference between a signal output by processing the signal for designing with the kernel and the denoised signal for designing is small.

**21.** The detection method according to claim 16, wherein the denoising model is trained using a noise signal.

**22.** The detection method according to claim 15, further comprising sorting the detection target with a sorter on the basis of the denoised signal.

# FIG.1

20:FLOW CELL
41:CYLINDRICAL LENS
54:SPATIAL FILTER
63:SPATIAL FILTER

COMPUTER — 300

| | |
|---|---|
| NOISE SIGNAL OBTAINER — 301 | DETECTION SIGNAL OBTAINER — 306 |
| LEARNING SIGNAL OBTAINER — 302 | DENOISED SIGNAL OBTAINER — 307 |
| NOISE GENERATION MODEL — 303 | DETERMINER — 308 |
| DENOISING MODEL — 304 | DESIGNING SIGNAL OBTAINER — 309 |
| TRAINER — 305 | PARAMETER SETTER — 310 |
| | FILTER — 311 |

EP 4 707 776 A1

# FIG.2

EP 4 707 776 A1

# FIG.3

20

TIGHTLY FOCUSED
EXCITATION LIGHT

32

HIGH N.A.
OBJECTIVE LENS

51

TIGHTLY FOCUSED FLOW

62

SPATIAL FILTER

64

63

PMT

12

# FIG.4

NOISE DATA

SIGNAL

TIME

TRAINING

NOISE MODEL
（CNN）

303

RANDOM
SAMPLING

#1

#2

#3

PLUGIN

PARTICLE
RAW DATA

SIGNAL

TIME

INPUT

VARIATIONAL
AUTOENCODER

304

MEDIAN
VALUE

SIGNAL

TIME

ACTUAL
DETECTION

NOISE FREE

COUNT

NOISE
(FALSE
DETECTION)

PARTICLE
(TRUE
DETECTION)

HEIGHT OF DETECTED SIGNAL

DENOISING

NOISE FREE

HEIGHT OF DETECTED SIGNAL

EP 4 707 776 A1

# FIG.5A

1st STEP: NOISE DISTRIBUTION ESTIMATION THROUGH THE NOISE MODEL (CNN) TRAINING

NOISE TIME SERIES

SIGNAL

TIME

NOISE MODEL (CNN)

303

INPUT

ESTIMATION

NOISE DISTRIBUTION ESTIMATED USING NOISE MODEL

$$p_\eta(\hat{n}) = p_\eta(\hat{n}(1)) \prod_{i=2}^{T} p_\eta(\hat{n}(t)|\hat{n}(<t))$$

2nd STEP: SIGNAL DISTRIBUTION ESTIMATION THROUGH DENOISING MODEL (VAE) TRAINING

NOISY TIME SERIES

SIGNAL

TIME

SUB-TRACTION

DENOISED TIME SERIES ESTIMATED BY VAE

TIME

SUBTRACTED TIME SERIES = ESTIMATED NOISE

TIME

NOISE DISTRIBUTION ESTIMATED BY VAE

DENOISING MODEL UNDER TRAINING(VAE)

INPUT

OUTPUT

304

FEEDBACK

# FIG.5B

THIRD STEP: PREDICTION OF DENOISED TIME SERIES BY TRAINED DENOISING MODEL

TIME SERIES INCLUDING NOISE

SIGNAL

TIME

INPUT

PREDICT

TRAINED DENOISING MODEL

PREDICTED SIGNAL DISTRIBUTION

$q_{\varphi\theta}(s|x)$

SAMPLED TIME SERIES DERIVED FROM $q_{\varphi\theta}(s|x)$

#1

#2

#100

MEDIAN VALUE

DENOISED TIME SERIES

SIGNAL

TIME

EP 4 707 776 A1

# FIG.6

# FIG.7

FILTER KERNEL

| 1 | 2 | 1 |
|---|---|---|

INPUT 1D
SIGNAL

| 1 | 1 | 2 | 1 | 2 | 2 | 1 |
|---|---|---|---|---|---|---|

OUTPUT

| | 5/4 | 6/4 | 6/4 | 7/4 | | |
|---|---|---|---|---|---|---|

# FIG.8

# FIG.9

PZT

70

# FIG.10

STATIC RANDOM OPTICAL STRUCTURE,H(x,y)

y
X

FLOW DIRECTION

EMISSION INTENSITY FROM $F_1$

TIME

EMISSION INTENSITY FROM $F_2$

TIME

ALL (TOTAL) EMISSION INTENSITY g(t) FROM OBJECT

TIME

EP 4 707 776 A1

# FIG.11

ATTENUATED SIGNAL

BAND-PASS FILTER (408/10)

PMT 1 MHz

GROUND TRUTH

BAND-PASS FILTER (408/10)

PMT 1 MHz

ATTENUATOR (ND FILTER)

BEAM SPLITTER R:T=10:90

f=200

SPATIAL FILTER

SCATTERED LIGHT 408nm

f=200

×40 NA=0.95

FLOW CELL

ILLUMINATION(408nm)

CYLINDRICAL LENS f=50

CYLINDRICAL LENS f=200

×20 NA=0.3

# FIG.12

GROUND TRUTH

ATTENUATED SIGNAL

DENOISED SIGNAL

TIME [$\mu$ s]

SCATTERED LIGHT SIGNAL WHOSE MAXIMUM VALUE IS NORMALIZED

# FIG.13

GROUND TRUTH

ATTENUATED SIGNAL

—— NOISE (FALSE DETECTION)
- - - PARTICLE (TRUE DETECTION)

DENOISED SIGNAL

SCATTERED LIGHT HEIGHT WHOSE MAXIMUM VALUE IS NORMALIZED

# FIG.14

# FIG.15

*FIG.16*

EP 4 707 776 A1

# FIG.17

BEFORE DENOISING

AFTER DENOISING

# FIG.18

# FIG.19

# FIG.20

# *FIG.21*

n=3, mean, technical replicate

# FIG.22

$y=9.36*10^3x$

AVERAGE NUMBER OF CD9(+)EV IN ONE MINUTE

● EXAMPLE
○ SP−FCM

BACKGROUND+3 × S.D.

DILUTION RATE BY SERUM SOLUTION

n=3, mean ± std, technical replicate

# FIG.23

# FIG.24

# FIG.25

n=3, mean ± std, technical replicate

# FIG.26

n=3, mean ± std, technical replicate

# FIG.27A

# FIG.27B

HEALTHY INDIVIDUAL

# FIG.28

n=5, biological replicate

# FIG.29

n=5, biological replicate

FIG.30

# FIG.31

SCATTERED LIGHT FILTER
(408/10)

ILLUMINATION

GT
SCATTERED LIGHT
408nm

F=50

PMT
1 MHz

SCATTERED LIGHT
TO BE ATTENUATED
408nm

F=200

BEAM SPLITTER
R:T=90:10

F=200   F=50   ATTENUATOR
(NDfilter)

SCATTERED
LIGHT FILTER
(408/10)

PMT
1 MHz

SPATIAL FILTER

F=200

ABSORPTION FILTER
(520/20)

SPATIAL FILTER
F=200

FLOW CELL

×40
NA=0.95
Air

FLUORESCENCE
(GREEN)

F=200

PMT
1 MHz

FLUORESCENCE
(GREEN)

EP 4 707 776 A1

EP 4 707 776 A1

# FIG.32

# FIG.33A

BEFORE DENOISING

# FIG.33B

AFTER DENOISING

# FIG.33C

GROUND TRUTH

# *FIG.34*

# FIG.35

FIG.36

EP 4 707 776 A1

# FIG.37

BEFORE DENOISING

AFTER DENOISING

EP 4 707 776 A1

# FIG.38

BEFORE DENOISING

FLUORESCENCE

SCATTERED LIGHT

Sample
● 40nm Paticle
● PBS

AFTER DENOISING

FLUORESCENCE

DENOISED SCATTERED LIGHT

Sample
● 40nm Paticle
● PBS

EP 4 707 776 A1

**FIG.39**

EP 4 707 776 A1

# FIG.40

# FIG.41

# FIG.42

# FIG.43

# *FIG.44*

# FIG.45

FIG.46

FIG.47

GROUND TRUTH

UNSUPERVISED DENOISING

DESIGNED TIME FILTER

OPTIMIZED GAUSSIAN FILTER

DESIGNED KALMAN SMOOTHER

DESIGNED KALMAN FILTER

DESIGNED FREQUENCY FILTER

BEFORE DENOISING

Time [µs]

RELATIVE INTENSITY + OFFSET

# FIG.48

Legend:
- GROUND TRUTH(mAP=1.00)
- UNSUPERVISED DENOISING(mAP=0.78)
- DESIGNED TIME FILTER(mAP=0.77)
- GAUSSIAN FILTER(mAP=0.68)
- DESIGNED KALMAN FILTER(mAP=0.63)
- DESIGNED KALMAN SMOOTHER(mAP=0.63)
- DESIGNED FREQUENCY FILTER(mAP=0.63)
- BEFORE DENOISING(mAP=0.48)

EP 4 707 776 A1

## INTERNATIONAL SEARCH REPORT

| International application No. |
|---|
| **PCT/JP2024/016828** |

**A. CLASSIFICATION OF SUBJECT MATTER**

*G01N 15/1429*(2024.01)i
FI: G01N15/1429

According to International Patent Classification (IPC) or to both national classification and IPC

**B. FIELDS SEARCHED**

Minimum documentation searched (classification system followed by classification symbols)

G01N15/00-G01N15/1492;G06N3/0455

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-505470 A (BECKMAN COULTER, INC.) 01 March 2012 (2012-03-01) paragraphs [0022]-[0049], fig. 1-5 | 15,18 |
| Y | paragraphs [0022]-[0049], fig. 1-5 | 22 |
| A | paragraphs [0022]-[0049], fig. 1-5 | 1-14, 16-17, 19-21 |
| Y | WO 2022/269960 A1 (SONY GROUP CORPORATION) 29 December 2022 (2022-12-29) paragraph [0086], fig. 14 | 22 |
| A | JP 2020-168353 A (CANON MEDICAL SYSTEMS CORP.) 15 October 2020 (2020-10-15) entire text, all drawings | 1-22 |
| A | JP 2021-038941 A (KABUSHIKI KAISHA TOYOTA CHUO KENKYUSHO) 11 March 2021 (2021-03-11) entire text, all drawings | 1-22 |

[✓] Further documents are listed in the continuation of Box C.      [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 June 2024** | **09 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/016828**

### C. DOCUMENTS CONSIDERED TO BE RELEVANT

| Category* | Citation of document, with indication, where appropriate, of the relevant passages | Relevant to claim No. |
|---|---|---|
| A | WO 2021/186962 A1 (SONY SEMICONDUCTOR SOLUTIONS CORPORATION) 23 September 2021 (2021-09-23)<br>entire text, all drawings | 1-22 |

Form PCT/ISA/210 (second sheet) (July 2022)

## INTERNATIONAL SEARCH REPORT
### Information on patent family members

International application No.

**PCT/JP2024/016828**

| Patent document cited in search report | | | Publication date (day/month/year) | Patent family member(s) | | | Publication date (day/month/year) |
|---|---|---|---|---|---|---|---|
| JP | 2012-505470 | A | 01 March 2012 | US paragraphs [0038]-[0063], fig. 1-5 WO | 2010/0088066 2010/042267 | A1 A2 | |
| WO | 2022/269960 | A1 | 29 December 2022 | CN | 117561433 | A | |
| JP | 2020-168353 | A | 15 October 2020 | US entire text, all drawings | 2020/0311490 | A1 | |
| JP | 2021-038941 | A | 11 March 2021 | (Family: none) | | | |
| WO | 2021/186962 | A1 | 23 September 2021 | US entire text, all drawings | 2023/0135628 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5230648 B
- JP 7134184 B
- JP 7329165 B
- JP 7369385 B
- US 63499732
- US 63605033